Europäisches Patentamt

European Patent Office

Office européen des brevets

(11) Publication number : **0 249 961 B1**

# EUROPEAN PATENT SPECIFICATION

(45) Date of publication of patent specification :
**14.09.94 Bulletin 94/37**

(51) Int. Cl.⁵ : **G06F 15/36**

(21) Application number : **87108696.3**

(22) Date of filing : **16.06.87**

(54) **Data processing device for use in statistic calculation.**

(30) Priority : **17.06.86 JP 142586/86**
**17.06.86 JP 142588/86**
**31.07.86 JP 181792/86**
**22.08.86 JP 197711/86**
**30.08.86 JP 204959/86**

(43) Date of publication of application :
**23.12.87 Bulletin 87/52**

(45) Publication of the grant of the patent :
**14.09.94 Bulletin 94/37**

(84) Designated Contracting States :
**DE FR GB**

(56) References cited :
**EP-A- 0 175 579**
**US-A- 4 321 688**

(73) Proprietor : **SHARP KABUSHIKI KAISHA**
**22-22 Nagaike-cho**
**Abeno-ku**
**Osaka 545 (JP)**

(72) Inventor : **Yanagiuchi, Shigenobu**
**25, Tabe-cho**
**Tenri-shi Nara-ken (JP)**
Inventor : **Kawai, Shoichi**
**1-23-12, Sangenyanishi**
**Taisho-ku**
**Osaka-shi Osaka (JP)**
Inventor : **Omura, Yukihiro**
**Mikasa-ryo**
**492, Minosho-cho**
**Yamatokoriyama-shi Nara-ken (JP)**
Inventor : **Kotani, Yasuhiro**
**639-8, Oshikuma-cho**
**Nara-shi Nara-ken (JP)**
Inventor : **Inoue, Kazuya**
**492, Minosho-cho**
**Yamatokoriyama-shi Nara-ken (JP)**

(74) Representative : **Selting, Günther, Dipl.-Ing. et al**
**Patentanwälte**
**von Kreisler, Selting, Werner**
**Postfach 10 22 41**
**D-50462 Köln (DE)**

## Description

The present invention relates to a data processing device of a mini-computer, so called a pocket computer, with statistic processing functions.

DESCRIPTION OF THE PRIOR ART

There has been a mini-computer, so called a pocket computer, with statistic processing function but the statistic processing function has been a single function.

In case of executing the statistic processing of the data in the following Table 1 for example,

Table 1

| Item (sample) | Mathematics | Japanese | Science |
|---|---|---|---|
| Aoki | 63 | 82 | 73 |
| Kato | 49 | 35 | 94 |
| Suzuki | 75 | 63 | 83 |

in order to calculate the average value of the results of mathematics, the averaging process is executed on the condition of inputting the data (63, 49, 75) of the results of mathematics and also in case of calculating the average value of the results of the Japanese, the averaging process is executed on the condition of inputting the data (82, 35, 63) of the results of the Japanese.

And moreover, in case of calculating the amount of each of the results of the mathematics and the Japanese, the operation is needed that each data of the results of the mathematics or the Japanese is inputted so as to obtain the amounts of the results of the mathematics or the Japanese, therefore, the operation has been very troublesome in case various kinds of statistic calculations are executed in the above-mentioned statistic processing system.

Furthermore, if once each data of the results is inputted and the statistic calculation is executed, the operations of the confirmation, replacement and adding of the inputted data can not be done and in case of executing the above-mentioned operations, it is necessary that the data of each result is inputted again from the first so as to execute the statistic calculation.

Moreover, in case the data processing is executed depending on the table format data, there is a problem that input missing of a partial data tends to occur since the whole data can not be seen collectively.

In a conventional mini-computer, in case a calculation of a distribution function is executed by using a mini-computer, the calculation processing has been executed by making a BASIC program on the basis of various kinds of approximate expressions and recurrence fomulas shown in "TOKEI-SUCHI-HYO (Statistic Values List)" published by Nippon Kikaku Kyokai (Japan Standard Association).

In making the BASIC program, the calculation of the distribution function has been executed by using the approximate expression but since there is a portion with bad calculation precision in the approximate expression, the distribution calculation has been executed by using the recurrence fomula in the above-mentioned bad precision portion.

In case of the program calculation by using a distribution list collecting the calculation values of the recurrence fomulas, the distribution list is memorized in the memory of the mini-computer and the necessary corresponding values of the calculations are called out one by one, whereby the program calculation has been performed.

However, it takes much time in general to calculate the distribution function by using the recurrence fomula and since a big memorizing capacity is needed to memorize the distribution list in the memory, it is impossible to cover the whole part of the distribution list.

Moreover, in the conventional mini-computer with statistic processing function of forming a table data of matrix shape, the title and the names of the column items and the row items are inputted and sequentially the data of the table are inputted in turns so that the desired table is made and the data are stored in a memory element such as random access memory (RAM) in turns as shown in Table 1. However, in case of repeating

EP 0 249 961 B1

the detection of the same data, the data must be inputted from the first every time the detection processing is executed so that the process becomes troublesome.

EP-A- 0 175 579 discloses a computer forming tables in memory and displaying data in table format. However it does not discuss carrying out statistical operations on such data.

## SUMMARY OF THE INVENTION

Considering of the above-mentioned problems in the conventional statistic processing system, the essential object of the present invention is to provide a minicomputer with a statistic processing system comprising a memory for storing data in a table format formed with plural items of rows and columns, wherein various kinds of statistic calculations are executed by using the memory of table format, whereby inputting of the data is made easy and the operations of the confirmation, replacement and adding of the inputted data can be done easily.

This object is achieved by the features claimed in claim 1

Another object of the present invention is to provide a statistic processing system which prevents the input miss of data by displaying an un-input data item or a missing data item clearly by means of specific symbols onto the display unit.

According to the present invention, each data is memorized into the memory in a table format made of plural row and column items by allocating the row and(or) column of the table format data into the memory by the input means and then the instructed calculation is executed with respect to the instructed row or column only by instructing any of the row or column of the item data stored in the memory and the kind of the statistic calculations. Therefore, various kinds of the statistic calculations such as a statistic process with one variable or two variables can be easily executed only by instructing the row or column and the kind of the statistic calculation without inputting the item data many times, and the confirmation and correction etc. of the input item data can be also easily done by the operation of reading and writing into the memory.

In the statistic processing system according to the present invention, in case the data read out of an item data area is a specific data, a specific character is displayed in the display unit.

## BRIEF DESCRIPTION OF THE DRAWINGS

Figs. 1, 11, 19, 22 are perspective views of minicomputers according to the present invention,

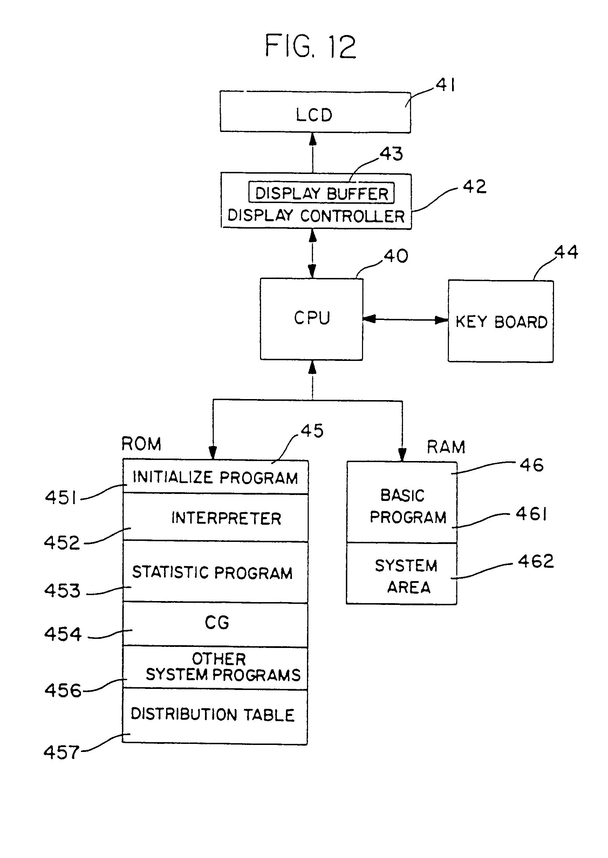

Figs. 2, 12, 23 are circuit block diagrams showing the mini-computers in Figs. 1, 11, 19, 22,

Figs. 3 to 7, 10, 15, 18, 21(A) to 21(D), 26, 27, are flow charts showing a statistic processing operation,

Fig. 8(A), 9(A), 20, 24 are constitutional views showing a memory for storing each data in a table format,

Fig. 8(B), 9(B) is a view showing data in a table format,

Fig. 13 is a view showing the suitability of the way of obtaining a distribution function,

Fig. 14 is a view showing an example of the part of the way of the t-distribution calculation by using the mini-computer,

Fig. 16 is a view showing a calculation operation of the mini-computer,

Fig. 17 is a view showing a BASIC language order corresponding to the distribution calculation keys,

Fig. 25 is a view showing a display example on the display unit.

## DETAILED DESCRIPTION OF THE PREFERRED EMBODIMENT

## [EMBODIMENT 1]

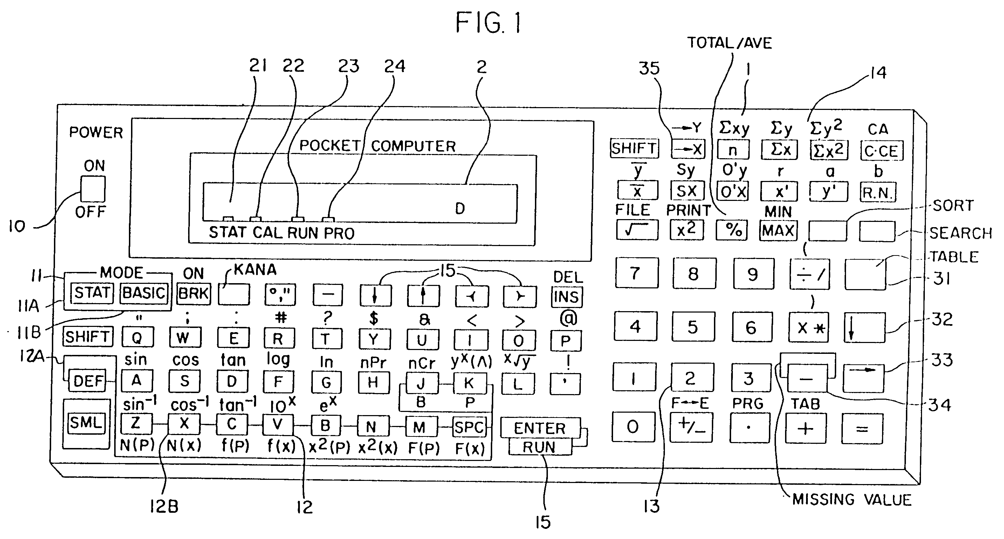

Fig. 1 is a schematic perspective view showing a mini-computer of handy type of the first and second embodiments according to the present invention. There are provided a liquid crystal display unit (referred to as LCD hereinafter) 2 in the left upper portion of the minicomputer (body) 1 and a key board including character input keys and function keys in the peripheral portion of the mini-computer body 1.

In the LCD2 there are provided a dot segment type display capacity with 24 units in one line and indicators 21, 22, 23 and 24 for indicating the mode condition of the mini-computer in the lower portion of the LCD2.

Next, referring to the various kinds of keys particularly to the keys with reference to the present invention, reference numeral 10 denotes a power switch and by turning the power switch 10 on, the mini-computer is powered up and initialized. Upon the intialization of the mini-computer, the mode of the mini-computer is preset in the statistic processing mode (STAT).

Reference numeral 11 denotes mode setting keys comprising STAT key 11A for setting a statistic processing mode (STAT) and a calculation mode (CAL) in turns at every operation, and BASIC key 11B for setting

3

a program running (RUN) mode for executing the operation of the program processing mode by the BASIC language and programming mode (PRO) in turns at every operation.

In the statistic processing STAT mode the indicator STAT21 is turned on, in the CAL mode the indicator CAL22 is turned on, in the RUN mode the indicator RUN23 is turned on and in the PRO mode the indicator PRO24 is turned on.

Reference numeral 12 denotes a group of the character input keys which are made definable for various kinds of opening keys. Particularly in the group of the lower keys 12B there are disposed character keys which are defined as a group of distribution function keys used in a statistic processing by operating the distribution function indicating keys 12A.

Reference numeral 13 denotes a group of numerical input keys and a group of calculation indicating keys and the subtraction key 34 is defined as an missing value key which indicates the absence of the item data in the statistic processing by switching the shift key.

Reference numeral 14 denotes a group of function keys for executing various kinds of statistic processing such as the calculations of the among value, average value and deviation value of the row or column of a table data on the basis of the table data which is stored in the table data area after the item data is inputted as described below. The statistic calculation processing is executed by operating the above mentioned function keys and the results of the calculations are outputted and applied to the LCD2 and stored in a predetermined position of the table data area. Reference numeral 15 denotes cursor keys.

Reference numeral 31 denotes a table key for forming and reading out each table data for the statistic processing, and reference numeral 32 denotes a row input ($\downarrow$ input) down shift key for selecting each item in the row direction of the table, and reference numeral 33 denotes a column input ($\rightarrow$ input) right shift key for selecting each item in the column direction of the table.

Reference numeral 35 denotes a statistic processing key ($\rightarrow$ X) with one variable or a statistic processing key ($\rightarrow$ Y), with two variables which are switched by the shift key. Reference mark ($\rightarrow$ X) or ($\rightarrow$ Y) means that one or two column items are processed statistically.

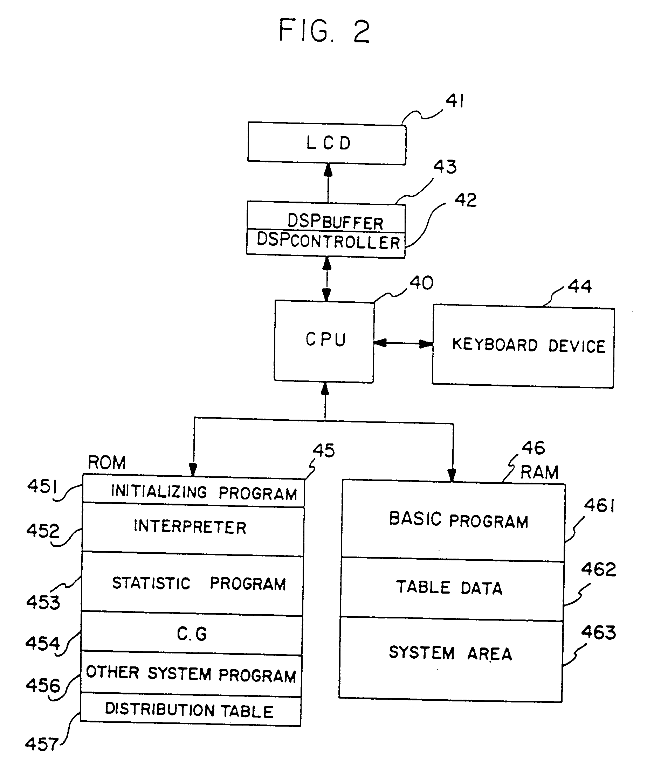

Fig. 2 is a circuit block diagram showing a minicomputer of the first and second embodiments according to the present invention.

Reference numeral 40 denotes a central processing unit (referred to as CPU) which executes the data processing depending on various kinds of control programs memorized in the read only memory ROM 45 connected to CPU 40 via a data bus line.

Reference numeral 41 denotes the aforementioned LCD which is driven for displaying by the display control unit 42 connected to CPU 40 and the display control unit 42 accommodates a display buffer 43 for storing display data (dot data).

Reference numeral 44 denotes the key board device shown in Fig. 1, which provides coded signals corresponding to the operated keys into CPU.

ROM 45 comprises an initializing program area 451 for storing an initial program controlling the initialization processing at the time of applying power, an interpreter area 452 of BASIC language, a statistic program area for memorizing the statistic processing control program of a flow chart as mentioned below, a character pattern generator (CG) area 454 for developing the code information of the character and symbol generated in CPU in a dot pattern for the output (for the display in the present embodiment), other system program area 456 for memorizing other various kinds of system programs and a distribution table area 457 for memorizing the calculation value on the basis of the predetermined condition of the distribution functions such as normal distribution, t-distribution, $X^2$-distribution and F-distribution in a table format (each data in the distribution table is generally known as a distribution list). It is preferable that each of the above mentioned areas 451 to 457 is made by ROM chip individually.

Reference numeral 46 denotes a random access memory RAM which is connected to CPU through a data bus line as well as ROM 45. RAM 46 comprises a BASIC program area 461 for storing the BASIC user program which is made by a operator, a table data area 462 for storing plural table data which is obtained by the statistic processing system of the present invention, and a system area 463 for allocating various kinds of buffers and counters.

In the system area 463 there are allocated an input buffer and h, C, L registers and m, n, X counters, which have reference to the present invention.

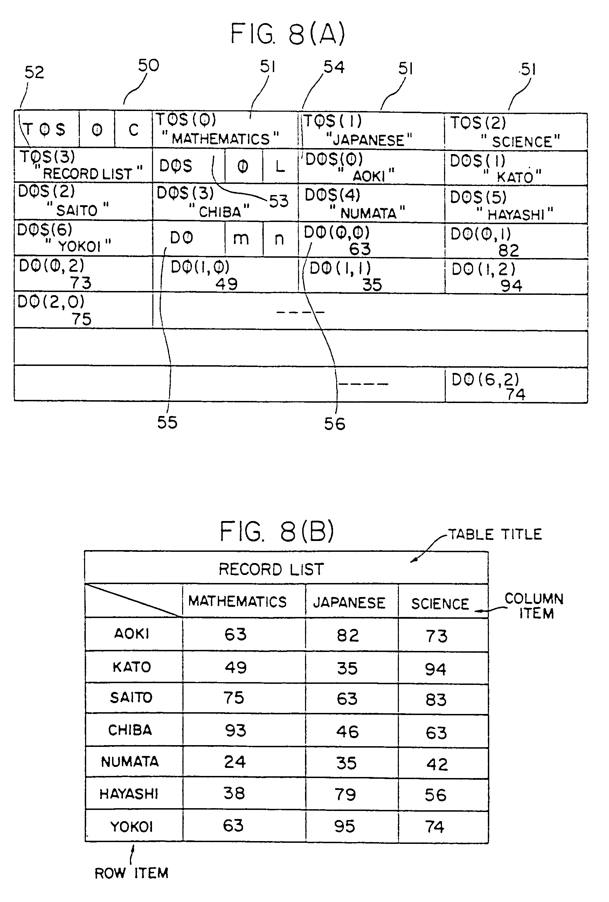

The table data area 462 is allocated in the BASIC variable data area as shown in Fig. 8(A).

In Fig. 8(A) there are shown the memory contents such as variables $T\phi\$$, $D\phi\$$, $D\phi(m,n)$ which are used for the input of the BASIC program and statistic data among the variable data. The head variable $T\phi\$$ represents the name of the variable and the variable C represents the number of the column item. Subsequently the column items $T\phi\$(\phi...T\phi\$(c)$ are stored (in this case c=3). Succeedingly the variable $D\phi\$$ for storing the name of the row item is stored. Furthermore, the data corresponding to each of the row and column is stored

in the variable $D\phi$. The reference marks m and n represent the column and row of the table or the numbers in the lateral and vertical directions of the two dimensional arrangement. Subsequently the data of each of the elements is respectively stored as the variables $D\phi (\phi,\phi)... D\phi (m, n)$ (in this case m=2, n=6).

As shown in the memory map of Fig. 8(A), the variables $T\phi\$$, $D\phi\$$, $D\phi(m, n)$ of the one dimensional and two dimensional arrangements which can be used in the BASIC program, and the table data inputted to be used in the statistic processing, are stored in common, whereby the link between the statistic processing data and the BASIC program becomes to be possible. In the present embodiment the value to be stored in the BASIC variable area is within the range as follows;

$$- 9.999999999 \times 10^{99} \leq \ \leq 9.999999999 \times 10^{99}$$

wherein the value $9.999999999 \times 10^{99}$ is defined as a missing value, and the value $-9.999999999 \times 10^{99}$ is defined as an un-input data.

Furthermore referring to the above mentioned missing value and un-input data, there has been adopted the way of memorizing special codes as a general data processing device in case the data is absent. However, it is necessary to discriminate whether the data is a missing value or an un-input data in the statistic process, therefore, if a special code is allocated with respect to the missing value or un-input data, it is necessary to arrange the specific code in order not to be used together with the other character files at the time of BASIC processing since the statistic process and the BASIC process are performed in common in case of the present device.

Therefore, in the statistic processing system according to the present invention, the maximum and minimum values which are hard to be generated, are allocated to the missing and un-input data respectively. The maximum and minimum values are discriminated by a minus sign.

The above-mentioned item data is set to a fixed length such as 16 bites and the data 50, 53, 55 of the variable name and item name are stored in the head of the item name.

The address position 53 storing or to store the next variable name is obtained by the item number as described in Japanese Patent Laid Open No. 43246/1982.

Thus, since the variable data on the BASIC is used together with the table data which is used in the statistic processing, the position of the variable data can be accessed by the command on the BASIC.

For example, the items 50, 51, 53 are allocated in the DiMT$\phi$ $\$(\phi)$, T$\phi$ $\$(1)$, T$\phi$ $\$(2)$ by the BASIC command, and the data of "mathematics" is stored by inputting T$\phi$ $\$(\phi)$ = mathematics. When the variable name of T$\phi$ $\$(\phi)$ is indicated, the variable data area of RAM i.e. the table data storing area is searched in turns so as to access the corresponding address. Reference numeral 52 denotes a table title item. By the way, the table data shown in Fig. 8(A) represents the table data examples in Fig. 8(B).

The statistic calculation processing is executed on the basis of the table data by operating any key of the function key group 14 and the calculation result as well as the variable name is allocated as a new item data in the table data area. Therefore, in the program process of ;the BASIC language, the variable name can be indicated to be used.

As mentioned above the table data formed by the statistic processing can be used on the BASIC program and the table data formed by the BASIC program can be used in the statistic processing.

Moreover, plural table data can be formed in series in the table data area. In case the table data is formed in the statistic process, though the explanation is omitted, the table data is allocated on RAM at every time of indicating the row and the column as well as the BASIC program as shown in Fig. 8(A).

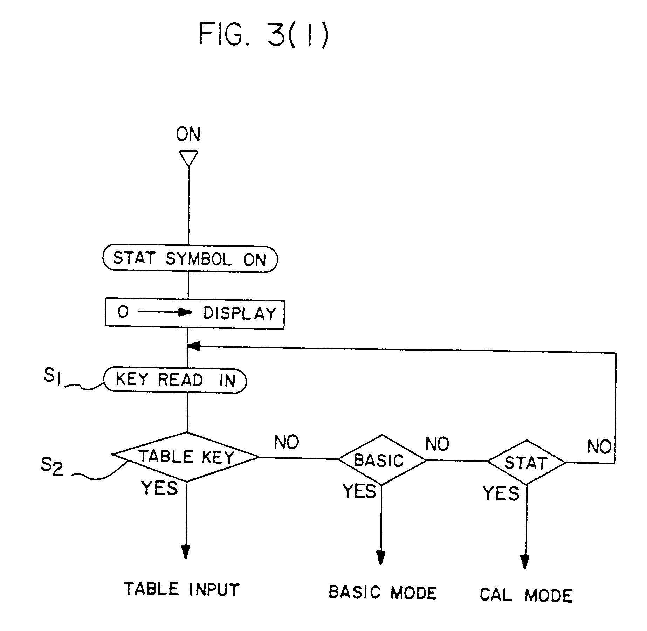

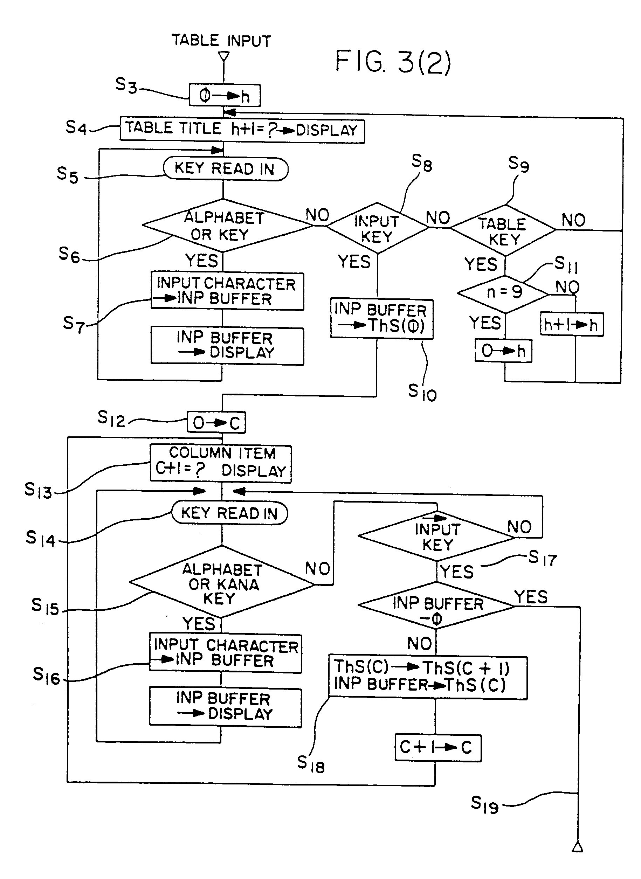

Next, the operations and actions of the present embodiment will be explained with reference to the flow charts shown in Figs. 3 to 7.

First, the initial program is powered up by turning on the power switch 10 of the mini-computer body 1 and the process shown in Fig. 3(1) is executed (assuming that the table data is not formed under this condition). After the above mentioned process, the statistic processing mode is automatically set and the STAT symbol 21 is turned on. The STAT symbol 21 is lighted by providing the STAT symbol lighting data from CPU 1 to the display buffer 43 and other symbols are turned on in similar way.

In case the table key 31 is operated in order to form a table under this condition, the statistic processing control program is started and the operation below the step shown in Fig. 3(2) is executed.

When the BASIC key 11B is operated, the process goes to the step of forming or performing the BASIC program. Furthermore, when the STAT key 11A is operated, the calculation mode is set and the program goes to the step of the calculation process.

The process of operating the table key 31 and forming the table shown in Fig. 8(B) is explained as follow.

In the execution of the process as shown in Fig. 3(2) by operating the table key 31, first the h register for storing the table number is reset to be $\phi$ in the step S3. Next in the step S4 the table title and then the data "the contents of the h register + 1 = ?" are transmitted to the display controller 42 so that "the table title 1 = ?" is displayed.

That is, in the step S3 the head position of the table data (the portion 50 in Fig. 8(A)) is indicated and it is judged whether the data of the variable name is present or not, and in case the data of the variable name is present, the last item area of the column item (obtained by the item number C) is accessed. In this item area the table title of the first table is stored and the data of the first table title is taken out and provided to the display LCD 41 and the display is changed to "?" and then the table title such as "RECORD LIST" is displayed.

In case the data of the variable name is absent, when the data of the variable name is inputted, the key data is read in the step S5 and the kind of the key is classified whether the key is an alphabet key or a kana key in the step S6. In the next step S7 the inputted character is stored in INPUT BUFFER and is transmitted to the display controller 42, whereby the table title is displayed in the display LCD 41. For example, when "RECORD LIST" is inputted by operating the key, "TABLE TITLE = RECORD LIST" is displayed.

Under this condition, when the input ($\rightarrow$) key 33 is typed, the kind of the key is judged in the step S8 and the inputted table title is stored in the variable data Th$($\phi$) of BASIC. In this case the table title of h = $\phi$ (see Fig. 8(B)) is indicated and is stored in the variable data Th$($\phi$). In case the table key 31 is typed in succession in the step S9, the content of the h register is raised up so that the next table number is selected in the step S11.

After the input of the table title is completed, the input of the column item is performed. In the step S12 the column item counter C is cleared and in the next step S13 "column item 1 = ?" is displayed.

Then it is judged whether the column item name is present or not, and in case the column item name is present, "column item 1 = ?" is displayed as well as the case of the table title.

In case the column item name is absent, the item name of the column item 1 is inputted and displayed in the steps S14, S15 and S16, wherein when "mathematics" is inputted, "column item 1 = mathematics" is displayed.

Moreover, in case the input ($\rightarrow$) key is pushed, the input key is judged in the step S17, and the name of the table title is transferred from the variable data T$\phi$ $($\phi$) to T$\phi$ $(1) and the item name of the column item 1 is stored in the variable data T$\phi$ $($\phi$) and successively the name of the column item is inputted, in other words, the display is changed as shown by "column item 2 = ?". Furthermore, in case "Japanese" is inputted and next "Science" is inputted, the second and third column items are set and the next display "column item 4 = ?" is executed.

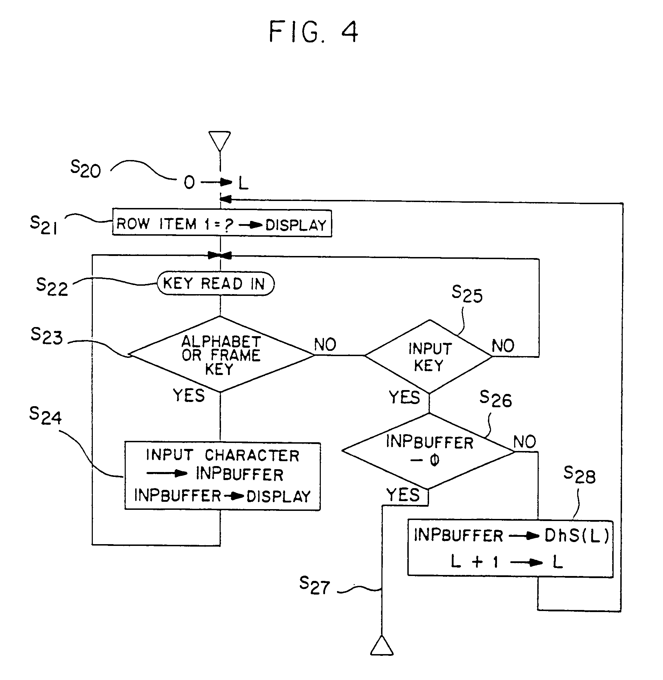

On this condition, in case the input key 33 is typed, it is judged in the step S17 that the character input is not present, and the program goes to the step S19 (in Fig. 4), whereby the setting of the column item is completed and the program goes to the step of waiting for the input of the row item.

The input of the row item is executed as shown by the flow in Fig. 4 and in the step S20 the L register for storing the row item number is cleared and "row item 1 = ?" is displayed in the step S21.

Then it is judged whether the row item name is present or not, in case the row item name is present, the row item name is displayed as well as the table title and the column item.

In case the data of the row item name is absent, when the data of the row item name "Aoki" is inputted, the display "row item 1 = Aoki" is performed in the steps S22, S23 and S24.

On this condition the row input key 32 is typed, the item name "Aoki" of the row item 1 is stored in the variable area D0$($\phi$) of BASIC in the steps S26 and S28 and the program returns to the step S21 and "row item 2 = ?" is displayed and the program goes to the process of waiting for the input of the second item.

Subsequently the data of the row items Kato, Saito, Hayashi and Yokoi is $\downarrow$ row-inputted in turns and after finishing the above-mentioned input, "row item 8 = ?" is displayed.

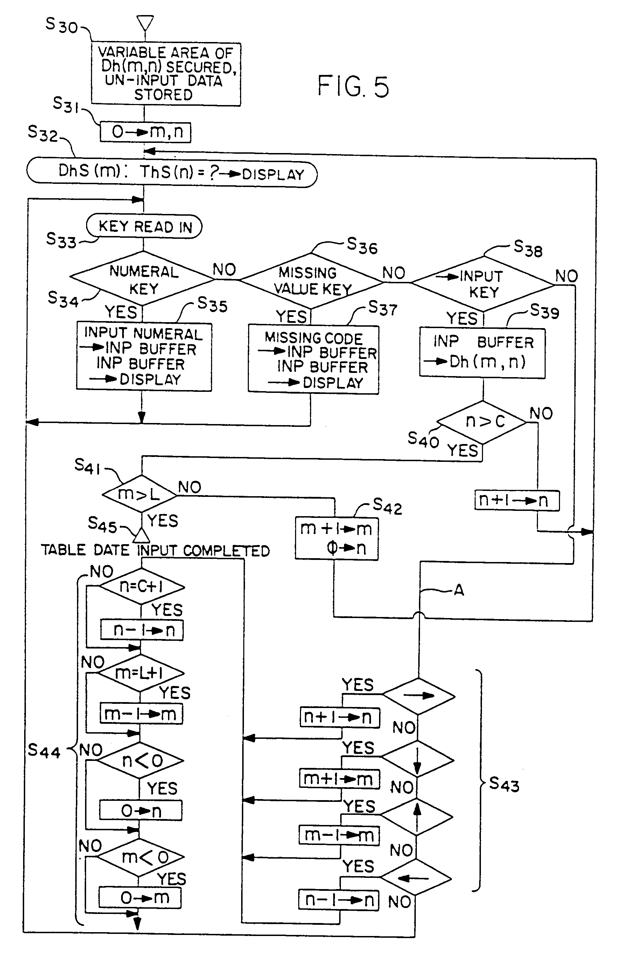

In case the row$\downarrow$ input key is typed once more, the program goes to the flow in Fig. 5 from the step S27 in Fig. 4 and the input of the data is executed.

Referring to the above mentioned input of the data as shown in Fig. 5, the variable area of Dh(m, n) is secured on the memory by the column item number and row item number and the un-input data is respectively stored in the step 30. Subsequently in the step S31 the values m, n showing the column and row items are cleared and in the next step S32 the display of "Aoki:mathematics = ?" is performed. This means that the input of the data in the portion of the first column and the first row in Fig. 8(B) is demanded.

At this time when the data "63" is inputted by the key 13, the values inputted in the steps S33, S34 and S35 are inputted in the INPUT BUFFER and are displayed in the display LCD41.

Furthermore, when the column input key 33 is operated, the mathematics record data "63" corresponding to Aoki is stored in the variable area D$\phi$ ($\phi$, $\phi$) of BASIC in the steps S38 and S39.

Subsequently in the step S40 it is judged whether or not the column item number n is over the value C, and in case the number n is not over the value C, the column counter value n is raised up by 1 so that the input of the data corresponding to the next column becomes possible. In case the number n is over the value C, the program goes to the step S41 and it is judged whether or not the row item number m is over the value L. In case the number m is not over the value L, the column counter value is set $\phi$ in the step S42 and the row counter value is raised up by 1 and the program goes to the process ;of the input of the data in the next row.

Thereby, the data 82, 73, 49,··· , 74 are inputted by operating the column input key 33 and the contents as shown in Fig. 8(B) are stored in the variable data area of BASIC.

By the way, in case the missing value key is pushed at the time of inputting the data in the process shown in fig. 5, the above mentioned missing value is stored as the data in the indicated variable area in the steps S36 and S37.

In the step S43 in case each of the cursor movement keys 15 →, ↓, ↑, ← is pushed, the cursor is moved to the indicated adjacent cell and the content of the cell indicated by the cursor is displayed in LCD 41 without rewriting the indicated variable data.

When the cursor reaches to the right or left end or the top or the bottom end, the movement of the cursor is stopped. The control of the movement of the cursor is executed in the step S44.

Thus, after the cursor is moved to any cell by operating the cursor keys 15, the data is newly inputted, whereby the data can be deleted or changed.

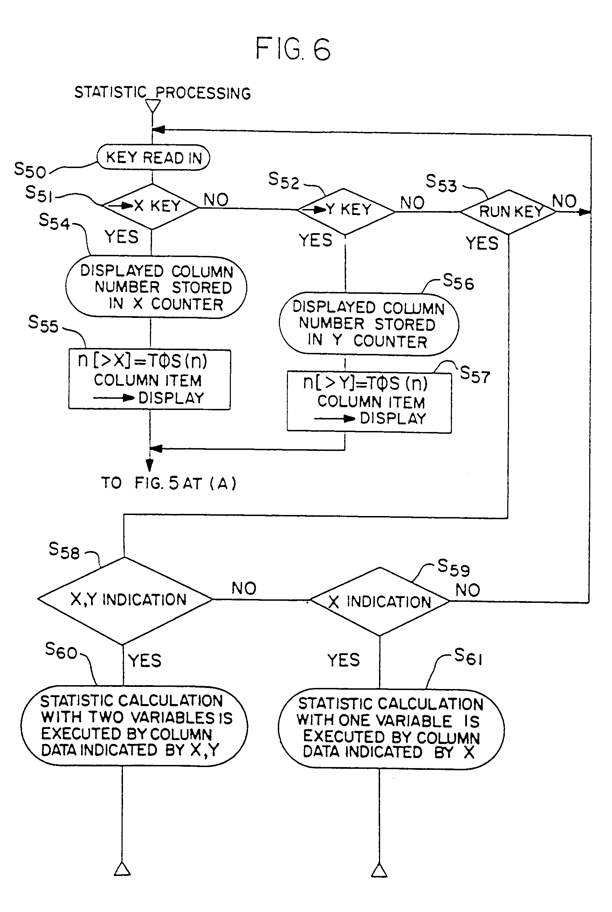

After the input of the table data is completed in the step S45 in Fig. 5, the program goes to the statistic process in Fig. 6.

Referring to the statistic process shown in Fig. 6, the input by the key is read in the step S50 and in case it is judged in the step S51 that the → X key 35 has been pushed, the displayed column number is stored in the X counter in the step S54 and the display is performed in the step S55 as follows.

In case the cursor is indicated at the column item 1 in the table, the display of "column item 1 [>X] = mathematics" is performed.

The Y column (the second column) is indicated in the steps S52, S56 and S57 in the same way as the X column (the first column).

Subsequently in the step S53 the execution key is judged and in the step S58 it is judged whether both X and Y columns are indicated or not and in the step S59 it is judged whether the single X column is indicated or not. In case of the both X and Y columns indication, the statistic calculation with two variables is executed by using the column data indicated by X and Y in the step S60.

In case of the single X column indication, the statistic calculation with one variable is executed by using the column data indicated by X in the step S61.

The statistic amounts are obtained by the above mentioned statistic calculation with two variables.

1. $n$, $\Sigma x$, $\Sigma x^2$, $Sx$, $\sigma x$ : same as the statistic calculation with one variable

2. $\Sigma y$ : the amount of sample(y)

3. $\Sigma y^2$: the amount of the square of the sample(y)

4. $\Sigma xy$: the amount of the product of the sample(x, y)

5. $\bar{y}$ y: the average $\bar{y} = \dfrac{\Sigma y}{n}$ of the sample (y)

6. Sy: assuming the parameter to be (n-1), the standard deviation

$$Sy = \sqrt{\frac{\Sigma \bar{y}^2 - n\bar{y}^2}{n-1}}$$

which is obtained by the sample(y)

7. σy: assuming the parameter to be(n), the standard deviation

$$\sigma y = \sqrt{\frac{\Sigma y^2 - n\bar{y}^2}{n}}$$

which is obtained by the sample(y)

8. $\alpha$: the coefficient $a = y - bx$ of one dimensional regression curve $y = a + bx$

9. b: the coefficient $b = \dfrac{Sxy}{Sxx}$ of one dimensional regression curve $y = a + bx$

10. r: the relative coefficient $r = \dfrac{Sxy}{Sxx \cdot Syy}$

11. x': the estimate (the value x is estimated by the value y) $x' = \dfrac{y - a}{b}$

12. y': the estimate (the value y is estimated by the value x)

$$y' = a + bx$$

$$Sxx = \Sigma x^2 - \frac{(\Sigma x)^2}{n}$$

$$Syy = \Sigma y^2 - \frac{(\Sigma y)^2}{n}$$

$$Sxy = \Sigma xy - \frac{\Sigma x \cdot \Sigma y}{n}$$

The statistic amounts are obtained by the statistic calculation with one variable as follows.

1. n: the number of the sample x

2. $\Sigma$ x: the amount of the sample x

3. $\Sigma$ $x^2$: the amount of the square of the sample x

4. $\bar{x}$ : the average $\bar{x} = \dfrac{\Sigma x}{n}$ of the sample x

5. Sx: assuming the parameter to be (n-1), the standard deviation

$$Sx = \sqrt{\frac{\Sigma x^2 - n\bar{x}^2}{n - 1}}$$

which is used when the standard deviation of the population is estimated from the sample data taken out of the population

6. $\sigma$ x: assuming the parameter to be (n), the standard deviation

$$\sigma x = \sqrt{\frac{\Sigma x^2 - n\bar{x}^2}{n}}$$

which is used in case all of the population are used as sample data or in case the standard deviation is calculated considering the sample to be the population

In the above mentioned statistic calculation, in case the indicated data is the missing value or the un-input data mentioned above, the data is excluded from the sample data and then the statistic processing calculation is executed. Thus, the missing value is inputted in the table data, whereby the processing of the missing data becomes to be possible in the statistic processing calculation.

As described above, in the statistic processing system according to the present invention, since the plural kinds of the table data are stored in the table data area and each item data is stored in the area by the above mentioned processing of forming the table as shown in Fig. 8, any processing of the various kinds of the statistic processing can be executed. The statistic processing with one variable is executed by selecting any of the column item group such as "mathematics" and operating any of the statistic processing keys group 14 shown in Fig. 1.

The statistic processing with two variables is executed by selecting any two column items much as "mathematics", "language" shown in Fig. 8(B) and inputting the item data into the X, Y registers respectively and by operating any of the statistic processing keys group 14 shown in Fig. 1. Therefore, since each item data is erased at the end of each calculation in the conventional minicomputer with statistic functions, various kinds of the statistic processing can not be executed and the data should be inputted at every time of the statistic processing calculations. However, in the statistic processing system according to the present invention, in case the selected and read out data is a missing value or an un-input data, the data is excluded and processed, for example, is not included in the sample data and processed.

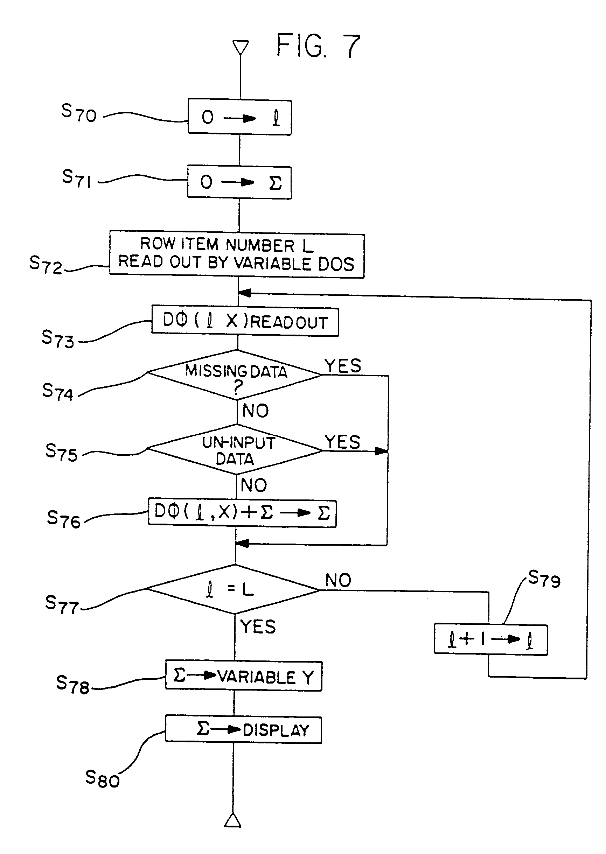

The processing way of the sample amount $\Sigma x$ is shown in Fig. 7 as an example. First, the count value 1 showing the row number and the amount register value $\Sigma$ are cleared in the steps S70 and S71. Next, the data of the variable name (for example D$\phi$$) 53 selected by the above mentioned way is selected so as to read out the row item number "L" which is kept in the L register in the step S72. Subsequently, the column item data is selected by operating the $\rightarrow$X key 35 and it is judged whether the data is the missing data or the un-input data in the steps S73 to S75.

In case the item data is the maximum (9.999999999 X $10^{99}$), it is judged that the item data is the missing data and in case the item data is the minimum (-9.999999999 X $10^{99}$), it is judged that the item data is the un-input data.

In case the item data is either the missing data or the un-input data, the program goes to the step S78 and the next row item data is selected, in other words, excluded from the statistic processing calculation. In case the item data is neither the missing data nor the un-input data, the program goes to the step S76 and the item data is added to the value of the $\Sigma$ register.

When the calculation is executed till the row counter value "1" reaches to the row item number "L", in other words, to the last row item number, the calculation is completed and the variable Y is allocated and stored in the table area in Fig. 8. At this time the data contained in the $\Sigma$ register is displayed.

The statistic processing system according to the present invention may best be understood by the explanation of the embodiment described above. By the way the characteristics of the statistic processing system according to the present invention are referred as follows.

(1) A statistic processing system of a minicomputer comprising;

A memory for storing each data of a table format formed of plural row and column entries,

input means for allocating said row and/or column of the table format data into said memory and inputting each item data,

Indicating means for indicating any of the row or the column of each item data stored in said memory by the above mentioned input means, and

calculation indicating keys for indicating plural kinds of statistic calculations, wherein the statistic calculation indicated by operating said calculation indicating key is executed on the data of the indicated row or column.

(2) A statistic processing system of a minicomputer with a function of executing a direct statistic calculation by operating a statistic calculation indicating key and with a function for executing a data process depending on a user program made at random, comprising;

a memory for storing each data in a table format formed of the plural row and column entries and input means for inputting each item data into said memory, wherein the item data inputted by the input means is stored in the same variable area which is allocated by a variable order in said user program, each item data obtained by the statistic process and each item data obtained by the data process depending on the user program can be used in common respectively by the data process depending on the user program and by the direct statistic calculation.

(3) A statistic processing system comprising;

a memory for storing each data in a table format made of plural row and column items,

input means for allocating the row and/or column of the table format data into the memory and inputting said each item data,

an indicating key for indicating and inputting that the data is not present when the item data is inputted as one key of said input means,

generating means for generating a sign data showing the absence of the data (i.e. missing data) in response to the operation of said indicating key,

indicating means for indicating any of the row or the column of each item data stored in the memory by the input means including said indicating key for inputting the absence of the data,

calculation indicating keys for indicating the plural kinds of the statistic calculations, and

detection means for detecting the sign data showing the missing data at the time of the statistic calculation processing, wherein the statistic calculation indicated by said calculation indicating keys is executed on the indicated row or column excluding the corresponding missing data from the sample number on the basis of the detection of the missing data.

As described above, in the statistic processing system of the mini-computer according to the present invention, comprising the memory for storing each data in the table form made by plural row and column items, each data is stored in the table format into the memory by the input means, subsequently any row or column of each of the item data stored in the memory and the kind of the statistic calculation are only indicated, whereby the indicated statistic calculation is executed for the indicated row and column. Since each data of a table format is stored in the memory, various kinds of the statistic processing calculation can be easily executed by indicating only the row or the column of the data and the kind of the statistic calculation such as a statistic processing with one variable or a statistic processing with two variables. Moreover, the confirmation, partial correction and addition of the inputted item data can be easily performed by reading in and writing in to the memory, so that the statistic processing is facilitated.

[EMBODIMENT 2]

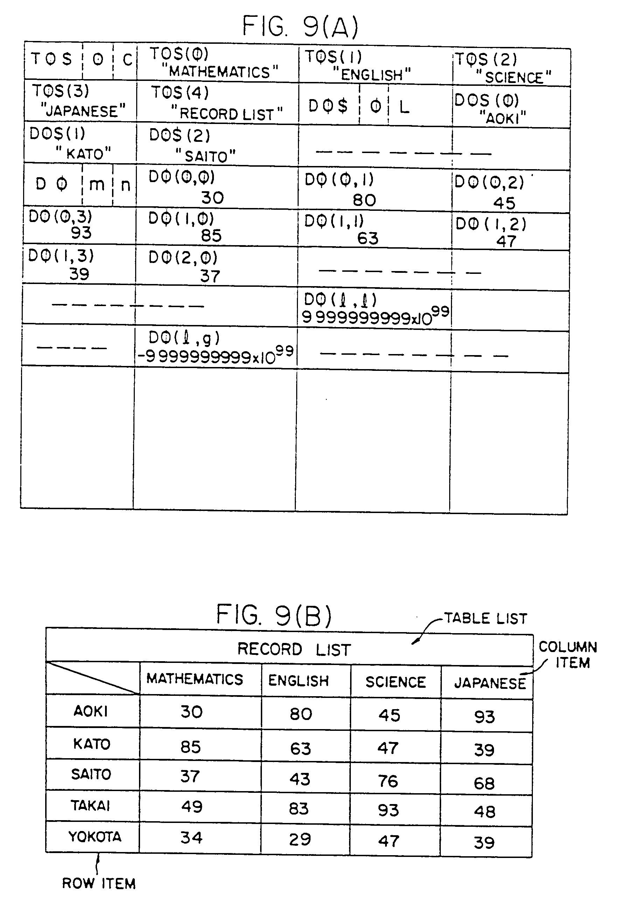

The second embodiment of the present invention is explained with reference to Figs. 1, 2, 3, 9 and 10.

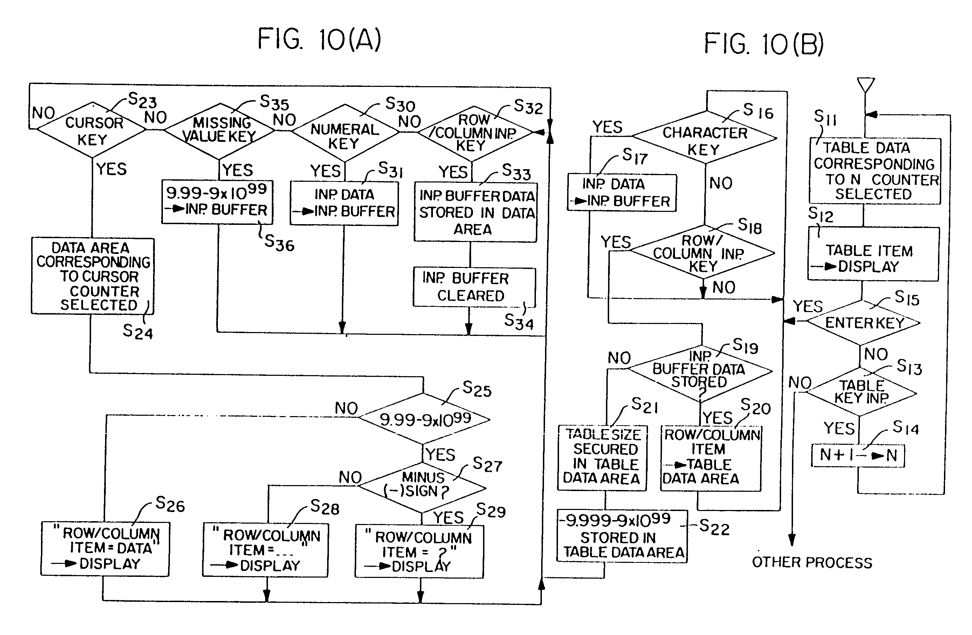

In case the table key 31 is operated and the statistic processing control program is started, the explanation of the operation and the action are described with reference to the flow chart shown in Figs. 10(A) and 10(B).

When the table key 31 is operated, the table data corresponding to the N counter (which is reset at the time of initialization) is selected and moved into the table data area 462 in the step S11, and subsequently the table item name is taken out and provided into the display buffer so as to be displayed on the LCD 2 in the step S12.

In case the displayed table item is different from the desired one, the table key 31 is operated once more in the step S13, whereby the reference of the displayed data is executed on the basis of the counter N+1 in the steps S14 to S11 and the table item name of the counter N+1 is displayed in the LCD 2 in the step S12. The above-mentioned operations are repeated till the desired table item is selected (S13 to S14 to S11 to S12).

When the desired table item is selected, the ENTER key is operated in the step S15. In case of making a new table data, after the counter of which the table item is not displayed because of the un-input of the data is selected, the ENTER key is operated, whereby a new table data can be made.

After the selection of the table item is completed by operating the ENTER key, the row and column items are inputted. In case the row and column item names have been already stored, the item names are displayed in the LCD 2.

In case of inputting a new row and/or column item name, after the portion of an un-input row and/or column item name is displayed by using the row and/or column input keys 32 and 33, the row and/or column item name is inputted by operating the character keys 12 in the step S16, whereby the input data is stored in the input buffer in the step S17.

In the next step S18 when the row/column input keys 32 and 33 are operated, it is judged in the step S19 whether or not the data is stored in the input buffer, subsequently the row/column item names are stored in the table data area in the step S20. Thus, the input of the row/column item names is completed by repeating the above-mentioned operations in turns.

When the input of the row/column item names is completed (the condition that there is no input buffer data in the step S19), the table size is secured in the table data area on the basis of the number of the inputted row/column item name in the step S21, and the minimum value $-9.999999999 \times 10^{99}$ showing the un-input data area written in the table data area in which the numerical data is not inputted in the step 522.

Thus, when the table size is secured and the minimum value $-9.999999999 \times 10^{99}$ showing the un-input data area is written in the display data area, each of the numerical data is inputted.

When the cursor keys 15 are operated in the step S23, the data area corresponding to the cursor counter is selected in the step S24, and it is judged in the step S25 whether or not the data stored in the data area is the maximum or minimum value $9.999999999 \times 10^{99}$. In case the data is neither the maximum nor the minimum value $9.999999999 \times 10^{99}$, since the data is stored in this data area, the data is displayed in the form such as "row/column item name = data" (to put it in the concrete "Aoki: Mathematics + 30") in the step S26.

In case the data stored in the data area is the maximum or the minimum value $9.999999999 \times 10^{99}$, it is judged in the step S27 whether the sign of the value $9.999999999 \times 10^{99}$ is plus(+) or minus(-) in order to judge whether the value $9.999999999 \times 10^{99}$ is the maximum or the minimum. In case the sign of the value $9.999999999 \times 10^{99}$ is plus(+), the data stored in the data area is judged to be the missing value and displayed as showing "_ _ _" for example on the LCD 2.

In case the sign of the value $9.999999999 \times 10^{99}$ is minus(-), it is judged that no data is stored in the data area and the no data condition is displayed on the LCD 2 as showing "row/column item name = ?" for example (to put it in the concrete "Kato: Mathematics = ?") in the step S29, and the numerical data is inputted under the above-mentioned condition.

Referring to the input operation of the data into the data area, first the cursor keys 15 are operated so that the data area in which the data is going to be inputted is selected. When the data is inputted by operating the numerical keys 13 in the step S30, the input data is stored in the input buffer in the step S31. Next, the row/column input keys 32 and/or 33 are operated in the step S32, whereby the data stored in the input buffer is stored in the data area in the step S33 and simultaneously the contents of the input buffer are cleared in the step S34.

Also in case of inputting the missing value, after the data area is selected by operating the cursor keys 15, the missing value key 34 is operated in the step S35, whereby the maximum value $9.999999999 \times 10^{99}$ showing the missing value is stored in the input buffer in the step 536. Then, the row/column input keys 32 and/or 33 are operated in the step S32, whereby the data stored in the input buffer is stored in the data area in the step S33 and simultaneously the contents of the input buffer are cleared in the step S34.

Thus, in case no data is memorized in the data area, the content of no data is displayed in the LCD 2 showing such as "row/column item name = ?", and in case the data stored in the data area is the missing value, the condition of the data is displayed showing such as "_ _ _" in the LCD 2, therefore, the input condition of the data can be easily judged and also the data input miss can be easily found at the time of inputting or confirming the data.

As described above, the display characters in case of the data not memorized in the data area are not limited to the display "row/column item name = ?" but any display can be set. In similar way to this case, also the display of the missing data is not limited to the display "_ _ _".

Moreover, the data which can be displayed as a specific character is not limited to the data not stored in the data area and to the missing value, but a specific data can be set when necessary and the specific characters corresponding to the specific data can be displayed on the LCD 2.

As described above, in the statistic processing system of the second embodiment according to the present invention, when the data stored in the item data area is read out, in case the data is a specific data, a specific character is displayed on the LCD 2 so that the condition of the data input can be easily judged at the time of data inputting or data confirmation, and still more the data input miss can be easily found.

Therefore, the data can be inputted more surely so as to obtain various kinds of statistic values correctly.

[EMBODIMENT 3]

Referring to the detailed explanation of the preferred embodiment 3 according to the present invention with reference to drawings as follows,

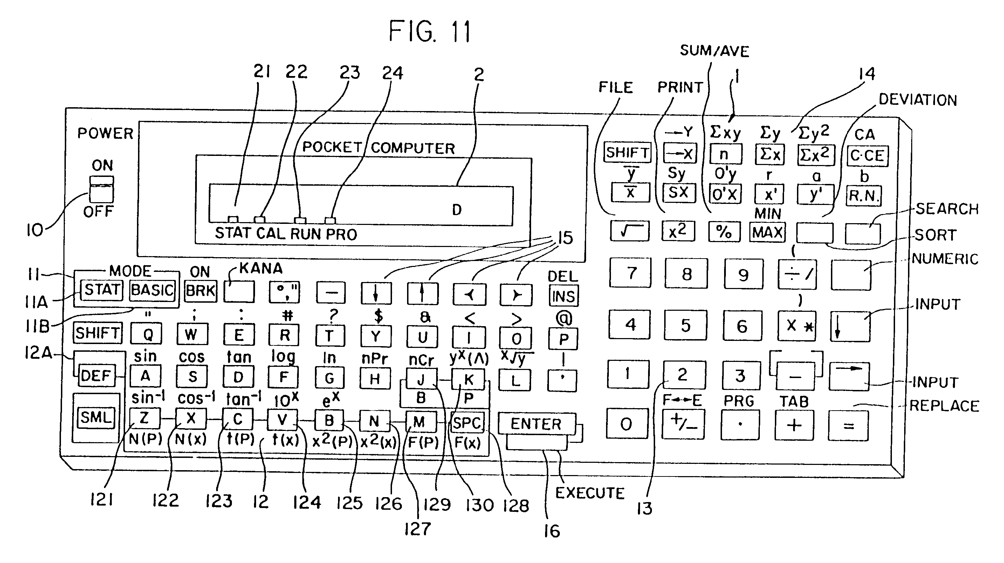

Fig. 11 is a schematic diagram showing an embodiment 3 of a mini-computer of handy type according to the present invention.

Reference numeral 1 denotes a mini-computer, wherein there are provided a liquid crystal display unit (referred to as LCD hereinafter) 2 in the upper left portion and a key board comprising character input keys and function keys in the peripheral portion of LCD 2. LCD 2 comprises a display capacity of 24 units in one line of dot segment type for example, and there are provided indicators 21, 22, 23 and 24 for displaying the mode condition of the minicomputer in the lower portion of LCD 2.

Reference numeral 10 denotes a power switch and by turning the power switch 10 on, the mini- computer is powered up and an initialization processing is executed, whereby the mode of the computer is preset into a statistic processing mode (STAT).

Reference numeral 11 denotes mode setting keys which comprise of a STAT key 11A for setting the statistic processing mode (STAT) and the calculation mode (CAL) alternately every time of operating the key 11A and a BASIC key 11B for setting the program processing mode by the BASIC language and setting alternately the program running mode (RUN) and the programming mode (PRO) every time of operating the key 11B.

The indicator STAT 21 is turned on at the time of STAT mode, the indicator CAL 22 is turned on at the time of CAL mode, the indicator RUN 23 is turned on at the time of RUN mode, and the indicator PRO 24 is turned on at the time of PRO mode.

Reference numeral 12 denotes a group of character input keys which can be defined also as various kinds of function keys. Particularly in the lower part of the character keys 12, there are arranged a group of character keys which is defined as a group of distribution function keys to be used in the statistic processing by operating the distribution function indicating key 12A.

Referring to the group of the above-mentioned distribution function keys, N(P) key and N(X) key which are allocated to the character Z key 121 and the character X key 122 respectively are calculation indicating keys of a normal distribution function, wherein the N(P) key is a calculation indicating key for indicating the calculation of a provability variable X to the upper provability P and the N(X) key is a calculation indicating key for indicating the calculation of the upper provability P from the provability variable X.

The t(P) key and the t(X) key which are allocated to the character C key 123 and the character V key 124 respectively are calculation indicating keys of t-distribution function which is used in case of detection or presumption of an average value or detection or presumption of the disparity of two average values, wherein the t(P) key is a calculation indicating key for indicating the calculation of the degree of freedom n and the provability variable X to the upper provability P and the t(X) key is a calculation indicating key for indicating the calculation of the upper provability P from the degree of freedom n and the provability variable X.

The $X^2$(P) key and the $X^2$(X) key which are allocated to the character B key 125 and the character N key 126 respectively are calculation indicating keys of $X^2$-distribution function which is used in case of detection or presumption of the divergence or in case of detection of the degree of suitability, wherein the $X^2$(P) key is a calculation indicating key for indicating the calculation of the degree of freedom n and the provability variable X to the upside provability P and the $X^2$(X) key is a calculation indicating key for indicating the calculation of the degree of freedom n of the upside provability P from the provability variable X.

The F(P) key and the F(X) key which are allocated to the character M key 127 and the space (SPC) key 128 respectively are calculation indicating keys of F-distribution function which is used in case of dealing with the degree of similarity of the divergence, wherein the F(P) key is a calculation indicating key for indicating the calculation of the degrees of freedom $n_1$ and $n_2$ and the provability variable X to the upside provability P and the F(X) key is a calculation indicating key for indicating the calculation of the degrees of freedom $n_1$, $n_2$ and the upside provability P from the provability variable X.

The B key allocated to the character J key 129 is a calculation indicating key of the binomial distribution i.e. the B distribution function, indicating the calculation of the provability of which the phenomena of provability P occur X times of n times, and the P key allocated to the character K key 130 is a calculation indicating key of the Poisson's distribution function i.e. P distribution, indicating the calculation of the provability of which the phenomena of average m occur X times.

The calculations of the above-mentioned distribution function are generally known in statistics, the calculation processing routine on the basis of the above-mentioned calculations are non-volatilly memorized in the mini-computer according to the present invention.

Reference numeral 13 denotes numerical input keys and the four rules of arithmetic calculation keys, reference numeral 14 denotes a group of the calculation indicating keys for calculating the average value and the deviation in the statistic processing.

Reference numeral 15 denotes cursor mark movement keys of the display unit 2, reference numeral 16 denotes an entering key for indicating the execution of the calculation on the basis of the indication of the calculation.

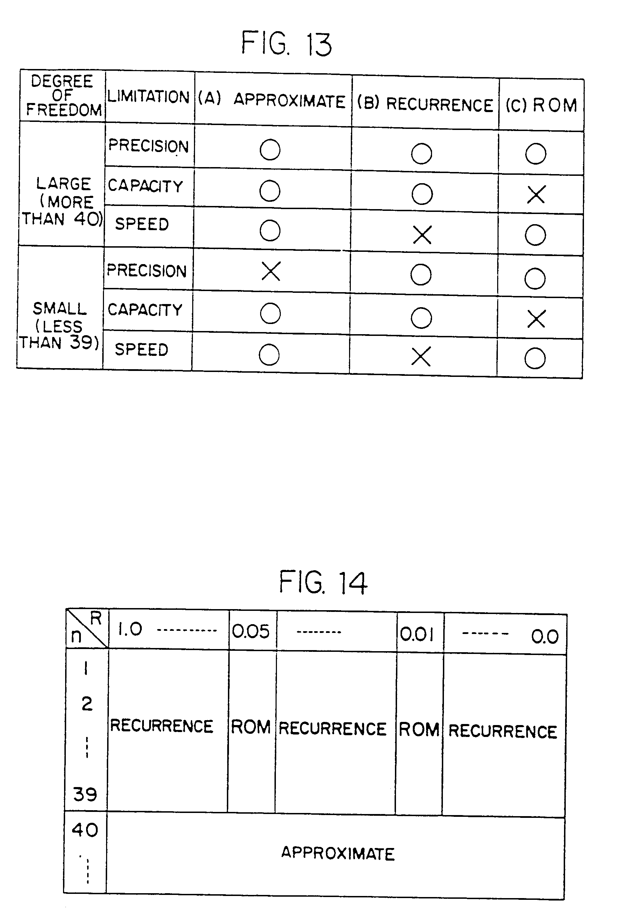

Fig. 13 is a diagram showing the suitability or unsuitability of,

(1) the precision of the obtained value

(2) the necessary memorizing capacity

(3) the necessary processing time till the value is obtained (whether the value is calculated in less than a few seconds or not),

of the way of calculating the distribution function as follows,

(A) the way of using the approximate expressions

(B) the way of using the recurrence fomulas

(C) the way of memorizing the distribution lists in the memory.

In Fig. 13 the suitability (O mark) and unsuitability (X mark) are shown in case the degree of freedom n is large (n $\geqq$ 40) and small (n<40) when the t-distribution function is adopted for example.

As shown in Fig. 13, in case of a large degree of freedom the calculation value with high precision can be obtained by using the approximate expression.

However, in case of a small degree of freedom, since the calculation value with bad precision is obtained by using the approximate expression, the recurrence fomula by which it takes a long time for calculation should be used. It is impossible because of the memorizing capacity limit to memorize all of the calculation values of the recurrence fomula in the range of using the recurrence fomula.

But in the function t(n,p) calculating the value t of the distribution point from the upside provability P of the t-distribution, the parameters are the degree of freedom n and the upside provability P, and in the upside provability P there are a few provabilities with very high frequency of use.

In the mini-computer according to the present invention, the approximate expression is used in case of a large degree of freedom and the recurrence fomula is used in case of a small degree of freedom and moreover only the calculation values of the recurrence fomula of the part of the upside provabilities P with high frequency of use is memorized in the memory, whereby the calculation speed can be made higher.

Fig. 14 is a view showing an example of the division of the way of the t-distribution calculation in the mini-computer according to the present invention, wherein assuming that the upside provabilities P with high frequency of use are 5% and 1%, the calculation values of the recurrence fomula of the above- mentioned upside provabilities P 5% and 1% are stored in ROM 45.

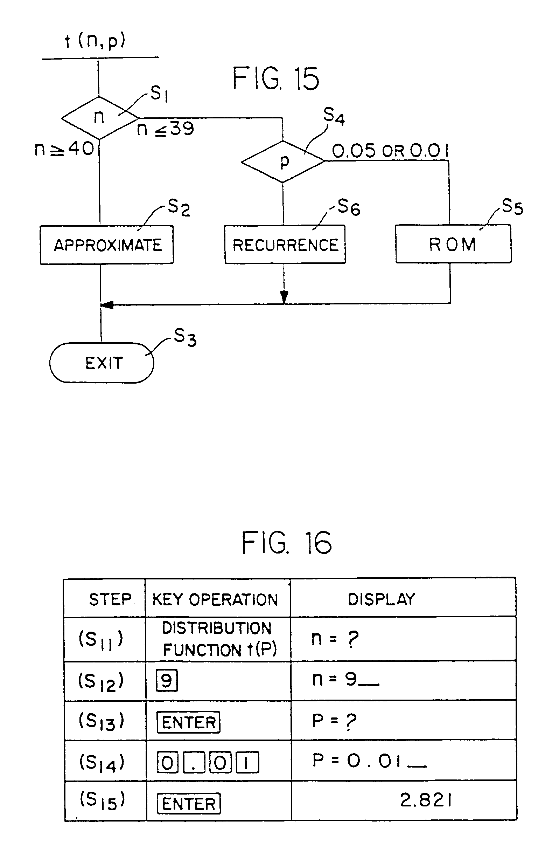

Fig. 15 is a flow chart showing a dividing process by which way the calculation of the function t(n, p) is executed.

First it is judged in the step S1 whether or not the degree of freedom is more than 40, and in case of more than 40 the calculation is executed by using the approximate expression in the step S2 and the calculation value is displayed in the display unit 2 in the display unit in the step S3.

In case the degree of freedom is less than 39, it is judged in the step S4 whether or not the upside provability P is stored in the ROM 45, and in case of storing the upside provability P the calculation is executed by using the upside provability P stored in ROM 45 in the step S5 and the calculation value is displayed in the display unit 2 in the step S3.

In case the upside provability P is not stored in ROM 45, the calculation of the distribution function is executed by using the recurrence fomula in the step S6 and the calculation value is displayed in the display unit in the step S3.

The calculation sequence of each of the distribution function keys is stored semi-fixedly in the statistic processing program in ROM 45. Each calculation sequence is processed corresponding to the flow chart shown in Fig. 15. That is, it is judged whether each calculation of the normal distribution function, t-distribution function, $X^2$-distribution function and F-distribution function is executed on the basis of the approximate expression, the recurrence fomula or the predetermined statistic values list depending on the condition of the degree of freedom n and the upside provability P. The calculation value is transferred to the display unit to be displayed.

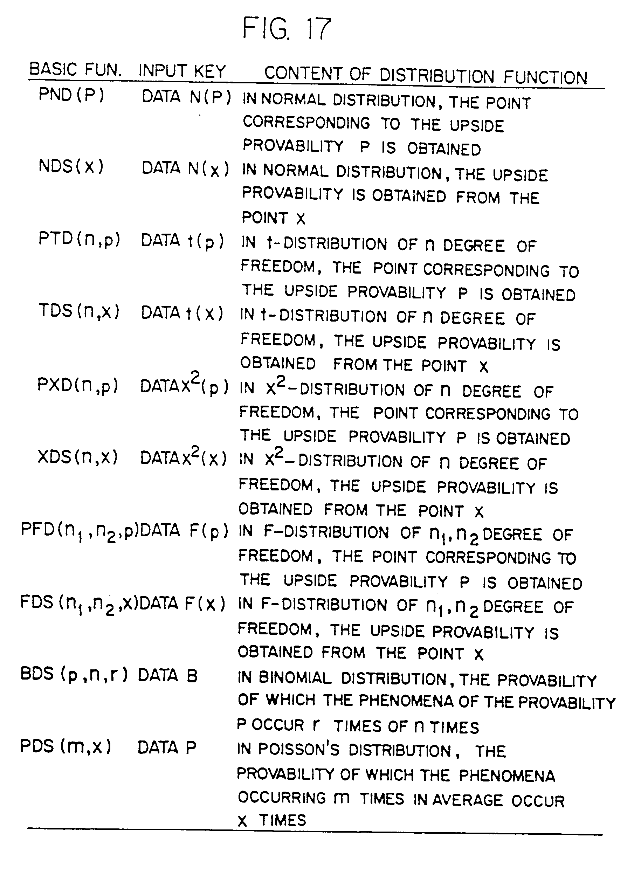

Similarly, the order of BASIC languages shown in Fig. 17 is provided corresponding to the calculation keys of the above-mentioned distribution functions, and the statistic calculation can be executed by making up a user program on the basis of the order of BASIC languages. The above-mentioned calculation sequence adopting the calculation routine on the basis of the keys, the calculation value can be displayed as mentioned above and also can be stored in other specific register.

Referring to the ways of operating the calculation of the distribution function in the mini-computer, there are two ways of the operation as follows.

(I) The way of using as a function which can be used linking with BASIC program.

(II) The way by pressing a key defined for the distribution function, a variable input message is displayed in the display unit and the value depending on the displayed message is inputted, whereby the function value can be obtained and displayed in the display unit.

Each operating way is explained in details hereinafter.

12

Referring to the case as an example of (I) in the t-distribution of the degree of freedom n in case the function t(n, p) determined by the upside provability P is defined as PTD(n, p), on the condition of BASIC input of a mini- computer, when PTD(9, 0.01) <u>ENTER</u> is inputted, the value 2.821 of the function when the upside provability is 1% in the t-distribution of 9 degree of freedom is displayed in the display unit.

And if X = PTD(9, 0.01) is set in the BASIC program, the above-mentioned value 2.281 is substituted.

The same value as mentioned above can be obtained as follows.

$$N = 9 : P = 1 : X = PTD(N, P/100)$$

In case of the example of (II), the t-distribution function PTD(n, p) is allocated to the character C key 123 and the calculation is executed by operating the allocated t(p) key.

That is, the mini-computer is set in the STAT mode for executing the statistic calculation function in a desk-computer. When the distribution function key 12 and subsequently the t(p) key are inputted under the condition of STAT mode, the calculation process enters the sequence for obtaining the t-distribution function PTD(n, p). The operation for obtaining the function PTD(9, 0.01) is shown in details with reference to the steps S11 to S15 in Fig. 16.

The step S11 shows the condition of waiting for the input of the degree of freedom n in the t-distribution by inputting the distribution function t(p) key and the step S12 shows the condition of inputting 9 as the degree of freedom n. The step S13 shows the condition that the <u>ENTER</u> key is sequentially inputted after inputting 9 as the value n and the input of the upside provability P as the next variable is waited. The step S14 shows the condition of inputting 0.01 as the value of the upside provability P. In the next step S15 the <u>ENTER</u> key is sequentially inputted after inputting 0.01, whereby the value 2.281 is obtained as the value of the t-distribution function PTD(9, 0.01) to be displayed. As described above, in the present embodiment when calculating the value of the distribution function, since the display indicating an input of a necessary variable is displayed, the operation can be made easy.

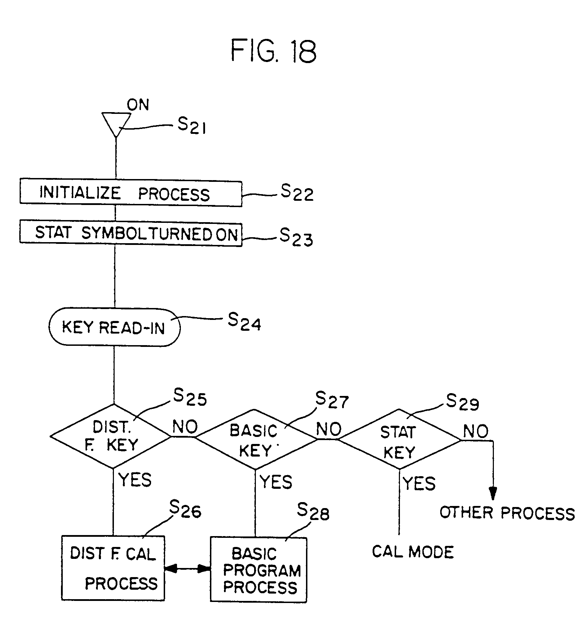

Fig. 18 is a flow chart showing a setting action of the mode condition of the mini-computer according to the present invention.

When the power is supplied in the step S21, the initializing program stored in the ROM 45 is performed in the step S22, and the initialization is executed and the STAT symbol 21 is turned on and a statistic processing mode is set in the step S23. (The display "0" is displayed. ) Under this condition reading-in the key is executed in order to judge whether the BASIC mode or the calculation mode (CAL mode) is set by operating the mode setting key 11 in the step S24.

When the distribution function indicating key 12A is operated, the calculation processing indicated by the distribution function key group 12B is executed in the step S26.

In the next step S27 the BASIC key is operated and in the step S28 the BASIC processing mode is set and the BASIC program processing is executed. In the BASIC mode the BASIC key is operated again, whereby the programmming mode (PRO) or the program running mode (RUN) is selected.

Besides, the STAT key is operated in the step S29 so as to set the CAL mode and other mode setting keys are operated so as to set the corresponding mode.

The mini-computer according to the present invention comprises the distribution function calculation indicating keys, the numerical keys for inputting the variables such as provability values and the degree of freedom and the non-volatile memory for memorizing the distribution function calculation routine on the basis of the distribution function calculation indicating keys, so that the calculation of a statistic examination and an estimation of a section can be executed without reference to the statistic numerical lists so as to be very convenient.

Moreover, since the calculation of the distribution function is executed by selecting one of the distribution function calculation routines such as the approximate calculation routine, the recurrence fomula calculation routine, and the calculation routine for selecting the corresponding calculation value of the calculation values group predetermined stored fixedly, the calculation value can be obtained in a short time with high precision, high calculation ability and a little memory capacity.

## [EMBODIMENT 4]

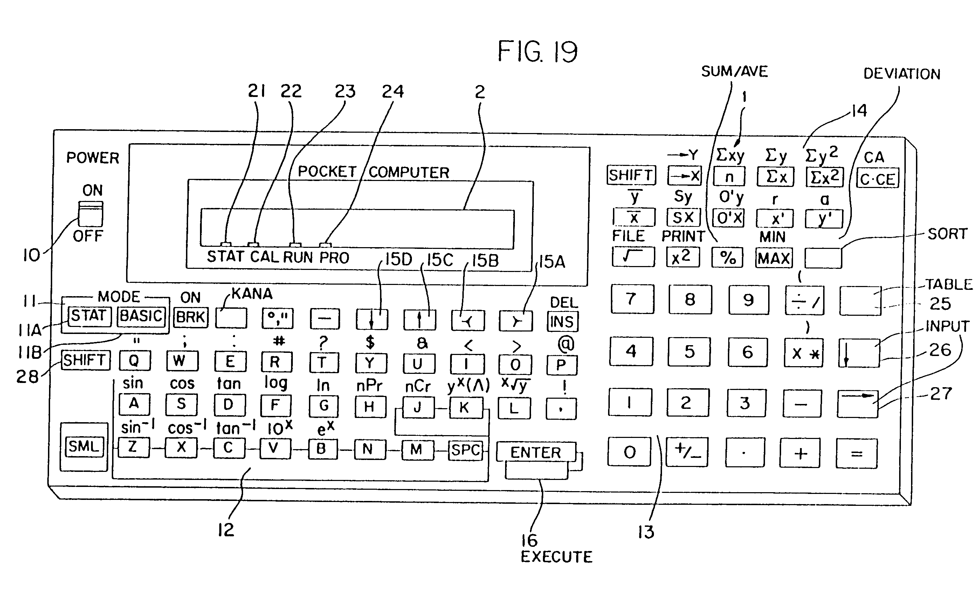

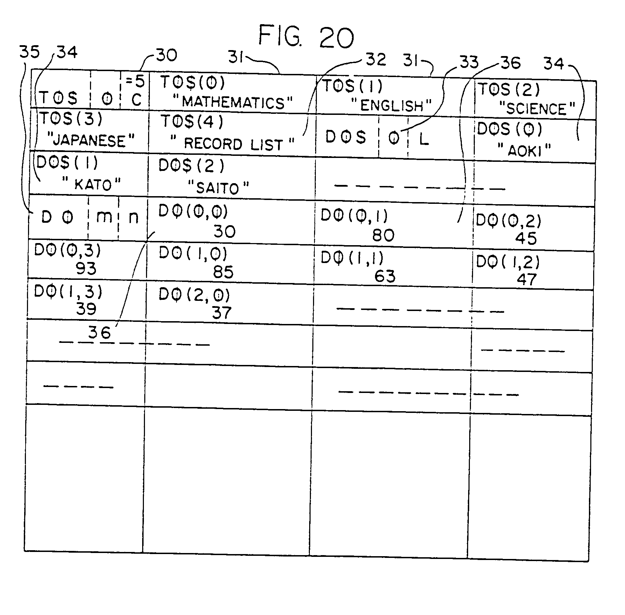

The fourth embodiment of the present invention is explained with reference to Figs. 19 to 21.

In Fig. 19 when the cursor keys 15A, 15B, 15C and 15D are operated sequentially after operating SIFT key 28, the item at the edge portion of the row or column of the item being displayed in the LCD2 is selected and displayed in the LCD2.

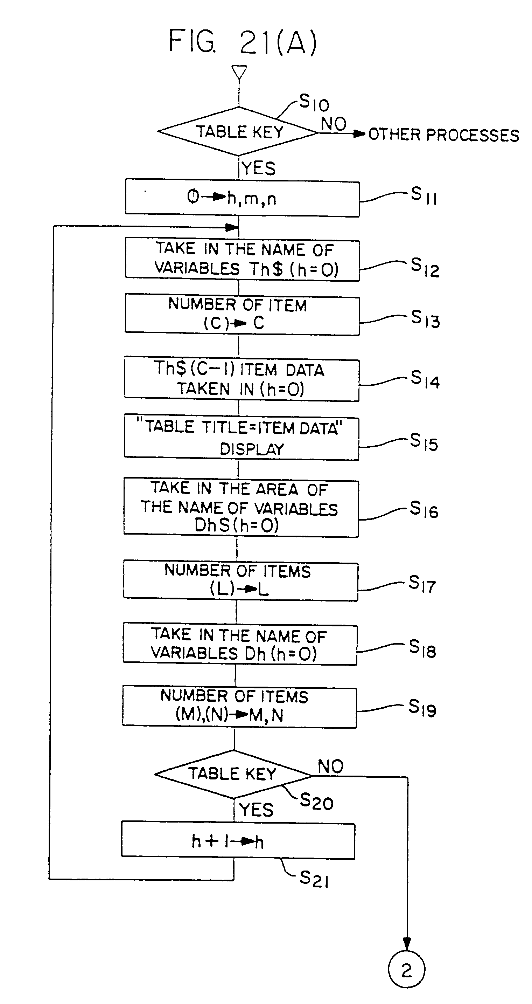

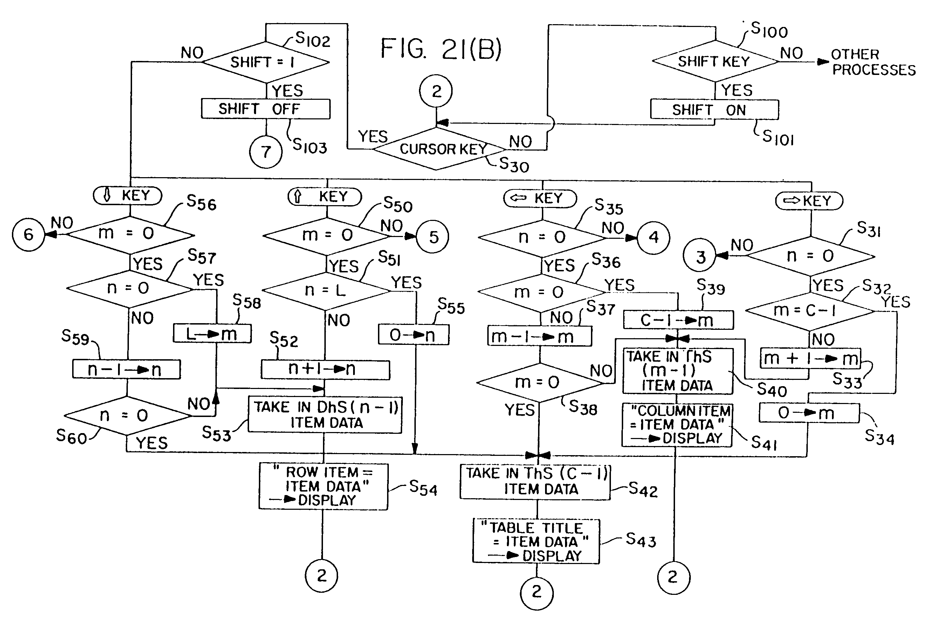

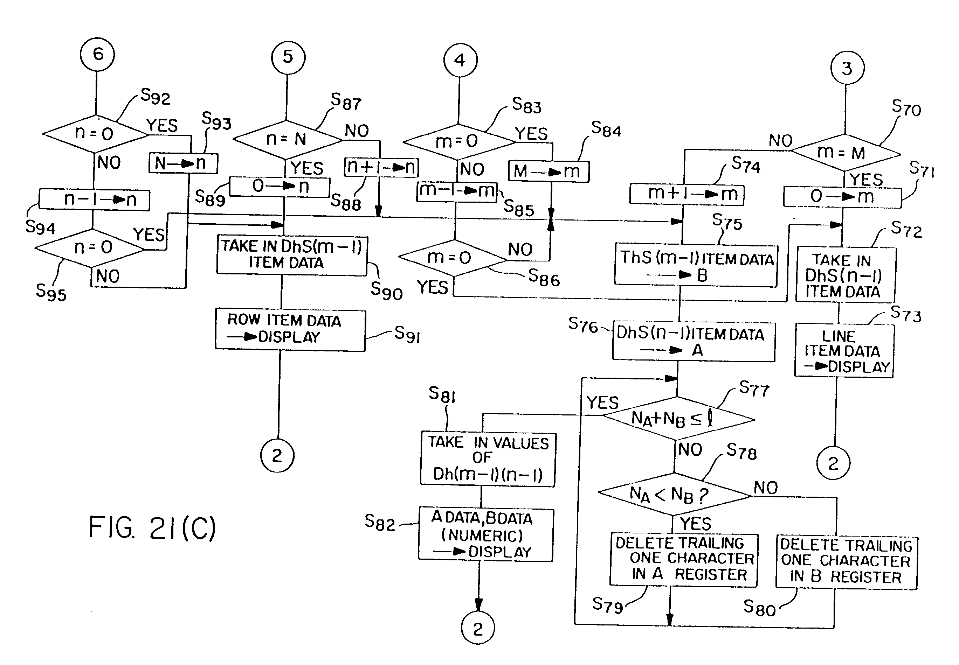

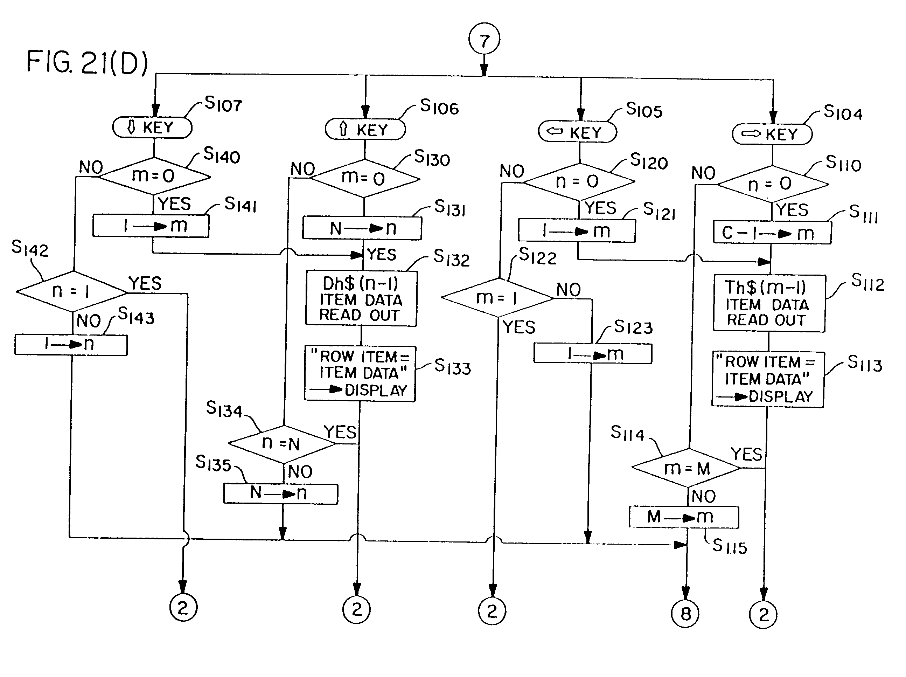

The operation at the time of operating the cursor keys 15A, 15B, 15C and 15d after operating the SIFT key 28 will be explained with reference to Fig. 21.

In Fig. 21(B) when the SIFT key 28 is operated in the S100, SIFT flag provided in the system area 463 is turned on in the step S101 and the next operation of the cursor keys 15A, 15B, 15C or 15D is waited in the step S30. When any of the cursor keys 15A, 15B, 15C or 15D is operated, it is judged in the step S102 whether or not the SIFT flag provided in the system area 463 is turned on, and then the SIFT flag is turned off in the step S103.

As shown in Fig. 21(D), when the cursor right sift key 15A for example is operated in the step S104, it is judged in the step S110 whether or not the count value n equals 0. In case the count value n is equal to 0, in other words, in case the column item data is displayed, the value c-1 (subtracting 1 from the item number c) is stored in the m counter in the step S111, and the variable name Th\$(m-1) or T0\$(3) is read out from the table data area 462 in the step S112 and then in case of the present embodiment "column item = Japanese" is displayed on the display unit 2 through the display buffer 43 in the step S113.

In case the count value n is not equal to 0, in other words, in case the data item is displayed, it is judged in the step S114 whether or not the count value m is equal to M, in other words, whether or not the data item being shown now is the rightmost item, and in case the data item is the rightmost item (m = M), the operation of the cursor right sift key 15A is ignored and the data item being shown now is displayed. In case the data item shown now is not the rightmost item (m ≠ M), the value M corresponding to the data item of the rightmost row is stored in the m counter in the step S115. Subsequently, the above-mentioned operation in the steps S75 to S82 (see Fig. 21(C)) is executed and "row item name: column item name = data item" such as "Aoki: Japanese = 93" is displayed.

On the other hand, when the cursor left shift key 15B is operated in the step S105, it is judged in the step S120 whether or not the count value n is equal to 0, and in case the count value n is equal to 0, in other words, in case the column item is displayed, the value 1 is stored in the m counter (1 → m) in the step S121 and then the above-mentioned operation in the steps S112 and S113 is executed so as to display the leftmost item (Mathematics in the present embodiment).

In case the count value n is not equal to 0, in other words, in case the data item is displayed, it is judged in the step S122 whether or not the count value m is equal to 1 (i.e. representing the leftmost item), the operation of the cursor key 15B is ignored and the data item being displayed now is displayed as it is. In case the count value m is not equal to 1, the value 1 is stored in the m counter (1 → m) in the step S123 and subsequently the above-mentioned operation in the steps S72 to S82 (see Fig. 21(C)) is executed and the leftmost data item such as "Kato: Mathematics = 85" is displayed.

When the cursor up shift key 15C is operated, the operation of the steps S106 and S130 to S135 is executed, and in case the row item name is displayed, the bottom row item name "row item = Yokota" is displayed and in case the data item is displayed, the bottom data item such as "Yokota: English = 29" is displayed.

When the cursor down shift key 15D is operated, the operation of the steps S107 and S140 to S143 is executed and in case the row item name is displayed, the top row item name "row item = Aoki" is displayed, and in case the data item is displayed, the top data item such as "Aoki: Mathematics = 30" is displayed.

As mentioned above, in the mini-computer according to the present invention, since the item names of the row and column of the desired end portion of the data and the character or numerical data in the corresponding end portion can be displayed on the display unit 2 by the operation means for indicating and selecting the end position of the desired row and column in the table data memory, when the data in the end position or near the end position of the table data is to be displayed on the display unit, the desired item data can be displayed with less operation without moving the data item in turns up and down or in right and left directions, so that the operating efficiency can be remarkably improved and the more the table data are, the shorter the operating time for displaying the table data can be made compared with the conventional mini-computer.

[EMBODIMENT 5]

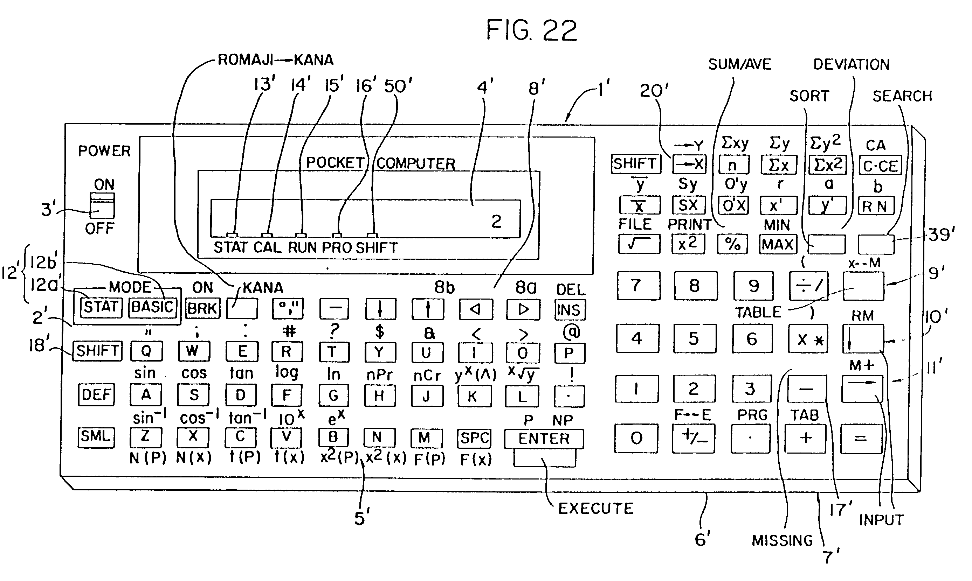

The fifth embodiment is explained with reference to Figs. 22 to 27.

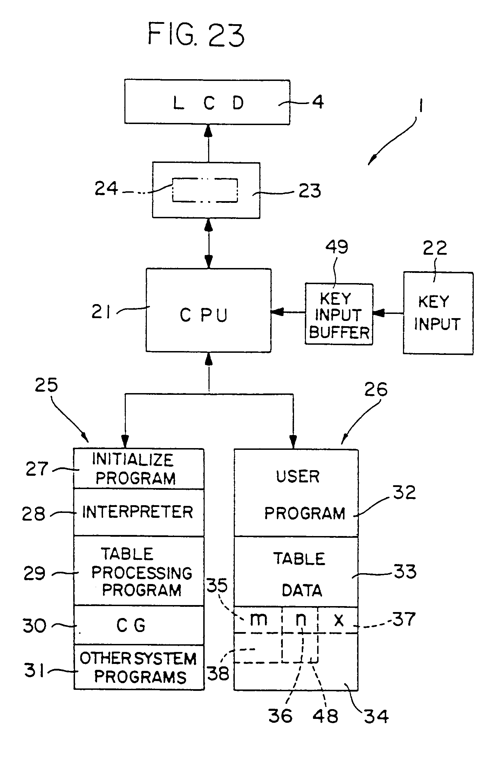

Fig. 22 is a front view showing a data processing device, so called a pocket computer 1 of an embodiment 5 according to the present invention, Fig. 23 is a circuit block diagram of the computer 1 shown in Fig. 22. The constitution of the computer 1 will be explained with reference to Figs. 22 and 23. There is provided a power switch 3 on the left upper portion of the front plane 2 of the computer 1. When the power switch 3 is turned on, the power can be supplied to the computer 1 and the computer 1 is initialized and set in a statistic processing mode (STAT).

There is provided a display unit 4 made of liquid crystal display element (LCD). The display unit 4 is for example a matrix operational type with a display capacity of one line 24 characters, and there are provided indicators 13 to 16 and 50 at the lower portion of the display unit for displaying various operation modes of the computer 1.

In the near portion of the display unit 4 there are provided a group of character input keys 5 including function keys which are operated when characters such as item names are inputted at the time of making a table as mentioned below, numerical input keys group 6, so called ten keys, calculation symbols (such as +, -, x, ÷) input keys group 7 and cursor keys group 3. A table key 9 is operated for making a table data as mentioned below, reference numeral 10 denotes a row input key which selects each of the rows to be inputted of the data matrix at the time of making a two dimensional table data as mentioned below. Reference numeral 11 denotes a column input key which selects each of the columns to be inputted of the data matrix as well as the row input key 10.

There are provided mode setting keys 12 consisting of a STAT key 12a for alternately setting the computer 1 in the statistic processing mode (STAT) and a calculation mode (CAL) every operation of the STAT key 12a and a BASIC key 12b for setting the computer 1 in a program processing mode (RUN) using BASIC language in addition to an operation of switching between a RUN mode in which the computer 1 executes the program and a programming mode (PRO) alternately every operation of the BASIC key 12b.

During the STAT mode, the indicator STAT 13 is turned on and during the CAL mode, the indicator CAL 14 is turned on. Similarly, during the RUN mode, the indicator RUN 15 is turned on and during the PRO mode, the indicator PRO 16 is turned on. When the shift key 18 is pressed, the indicator 50 is turned on. The minus sign key 17 is defined as a missing value key for indicating the absence of item data in the statistic processing by switching the shift key 18. Reference numeral 19 denotes a function key group for calculation each of the various kinds of statistic processing such as the sums, average values, deviation values of the row and column of the table data, on the basis of the table data inputted and stored in the table data area as mentioned below. The statistic calculation processing is executed by operating the above-mentioned function keys group 19 and the calculated results are displayed on the display unit 4 and stored in the predetermined position of the table data area 33.

A variable indicating key 35 indicates a statistic processing key ( → X key) with one variable or a statistic processing key ( → Y key) with two variables, which is switched by operating the shift key 18. The above-mentioned → X key and → Y key execute the statistic processing of one or two column items respectively. Moreover, there is provided a search key 39 for searching the data item in the table data and displaying them on the display unit 4.

The computer 1 comprises a central processing unit (referred to CPU hereinafter) 21 for executing various kinds of data processing. The CPU 21 is connected to the key input portion 22 including such as the character input key group 5 through the key input buffer 49 and is also connected to the display unit 4 through the display control unit (DCU) 23. There is provided a display buffer in the display control unit DCU 23 for storing temporarily the data to be displayed on the display unit 4.

Moreover, the CPU 21 is connected to a fixing memory 25 made of ROM (read only memory) and to a memory 26 made of RAM(random access memory) and memory means consists of the fixing memory 25 and the memory 26.

ROM 25 comprises an initial program area 27 for storing the initial program which controls the initializing processing, an interpreter area 28 for storing the interpreter program of the BASIC language used in the computer 1, a statistic processing program area 29 for storing a statistic processing program as mentioned below, a character generator (referred to as CG) program area 30 for storing the CG program which generates display character of dot pattern corresponding to the code information of the character code data to be inputted into CPU 21 depending on the operation of the key input portion 22, and a system program area 31 for storing various kinds of system programs.

RAM 26 comprises a user program area 32 for storing one or more user programs or various data written by a user of the computer 1 in BASIC language, a table data area 33 for storing table data prepared in the statistic processing and a system area 34 for allocating various buffers and counters or registers. The system area 34 contains m, n, X registers 35, 36, 37 and a comparing buffer 38 and a counter 48.

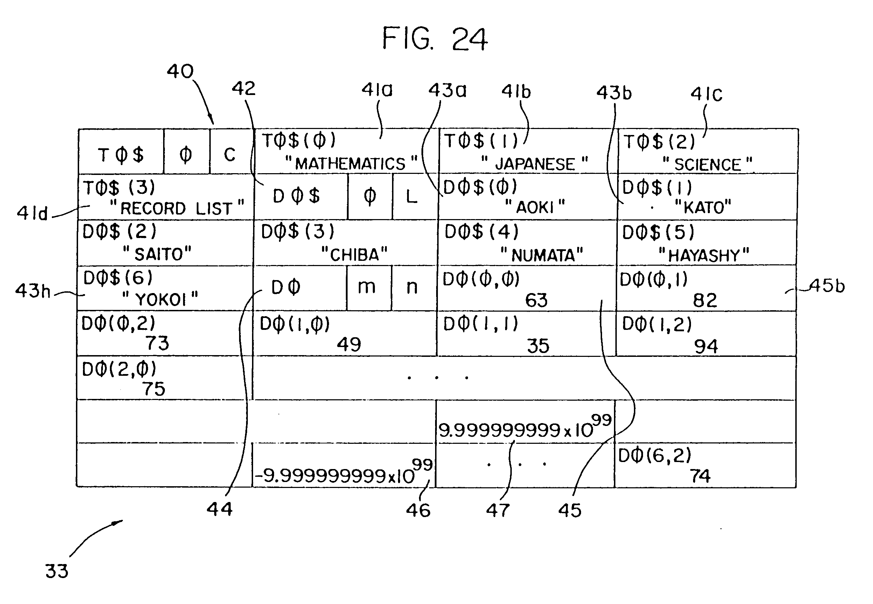

Fig. 24 shows the aspects of allocating various data in the table data area 33. The table data area 33 is allocated to a part of the user program area 32 and each of the data in the table data area 33 are stored at very input processing or by the order of allocating variable data of a BASIC program so that the table data is made. An example of the data in the table data area 33 as shown in Fig. 24 corresponds to the Table 2 and each of the items of the table data is made in the length of 16 bites.

## Table 2 (RECORD LIST)

|         | Mathematics | Japanese | Science |
|---------|-------------|----------|---------|
| Aoki    | 63          | 82       | 73      |
| Kato    | 49          | 35       | 94      |
| Saito   | 75          | 63       | 83      |
| Chiba   | · 93        | 46       | 63      |
| Numata  | 24          | 35       | 42      |
| Hayashi | 38          | 79       | 56      |
| Yokoi   | 63          | 95       | 74      |

In the head address side of the table data area 33 there is provided a defining area 40 for defining and allocating a string function Th$(c1) to which the title of the table and the column item name of the table are allocated and the number of the column items ( in fact the number of the column items +1). Subsequently, there are defined column item name areas 41a to 41b for storing the column item name shown in Table 2 by using the count value cl of C register as a parameter as follows.

$$T0\$(0) = \text{"Mathematics"} \quad (1)$$

There is sequentially provided a defining area 42 so as to store the string function Dh$(L) to which the data of the row item name such as "Aoki" in Table 2. Subsequently there are defined row item name areas 43a, 43b, 43c, ···, 43h as a parameter of the count value L so as to store the respective row item names as follows for example.

$$D0\$(0) = \text{"Aoki"} \quad (2)$$

Sequentially there is provided a defining area 44 for defining a numerical function Dh(m1, n1) to which the input data corresponding to the record in case of Table 2 and then there are sequentially provided data areas 45a, 45b, ··· , 45h so as to store each of the inputted data as follows for example.

$$D0(0, 0) = 30 \quad (3)$$

The above-mentioned data are automatically allocated to the table data area 33 every input processing of the data any by variation order of the BASIC language. The address value of the data position is calculated by the variable names and the number of items stored in the defining areas 40, 42 and 44 in the access for reading out the data. The linking between the statistic processing data and the BASIC program can be done by including the one dimensional or two dimensional arrangement functions T0$, D0$ and D0(m1, n1) which can be used in the BASIC program, together with the table data inputted for use in the statistic processing. In the present embodiment the value to be stored in the variable area in BASIC language is in the range of the value more than $-9.999999999 \times 10^{99}$ less than $9.9999999999 \times 10^{99}$.

The data shown in the area 46 of the table data area 33 is a non-entered data which is allocated to the memory area estimated by the maximum column length M and the maximum row length N of the data matrix defined in the defining area 44 in case the input operation of the computer 1 is not executed and all of the data are stored in the corresponding area in the table data area 33. The data $9.999999999 \times 10^{99}$ shown in the area 47 is a missing data representing the absence of the data.

The numerical data in the areas 46 and 47 are the minimum and maximum data which can be used in the computer 1 and the reason why the minimum and maximum data for representing the non-input, the absence of the data are used is described as follows. That is, though in the computer 1 a specific code on the basis of the BASIC language can be used for the above-mentioned purpose, the computer 1 enables the program processing of the BASIC language so as to use various kinds of code systems. Accordingly, the maximum and minimum data are used in order to prevent such code systems from being limited effectively. By the way, there seldom occurs the maximum and minimum data of the data processing ability of the computer 1.

As described above, the computer 1 includes the variable data in BASIC language together with the table data to be used in the statistic processing, therefore, the variable data position can be accessed by the command in BASIC language.

For example, the defining area 40 and the column item area 41 are allocated with DIMT0$(0), T0$(1)and

16

T0$(2) by the BASIC command and the data "Mathematics" is stored by the input of T0$(0) = Mathematics. When the variable name of T0$(0) is indicated, the variable data area in the memory 26, the table data area 33 is searched in turns and the corresponding address is accessed. The column item area 41d is a table title item. The table data shown in Fig. 24 represents the display data column in Table 2.

The statistic calculation processing is executed on the basis of the table data by operating any key of the function keys group 19, and the calculated value as well as said variable name is allocated to the table data area 33 as a new item data. Therefore, the variable name can be indicated and used in the program processing of the BASIC language.

As mentioned above, the table data made by the statistic processing can be used on the BASIC program and the table data made by the BASIC program can be used in the statistic process.

Plural table data can be sequentially made in the table data area 33. In case the table data is made in the statistic processing, though the explanation is omitted, the table data is allocated to the memory 26 every time each row and column are indicated as well as the BASIC program as shown in Fig. 24.

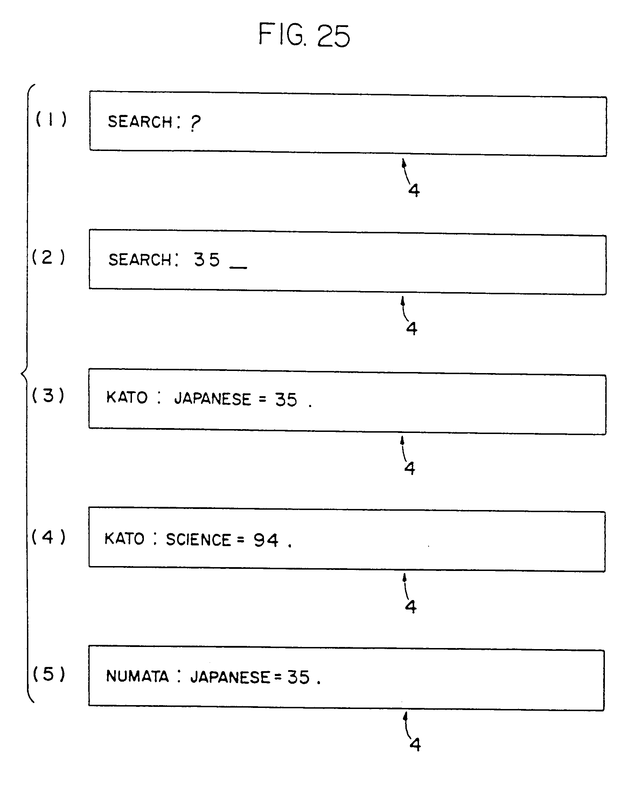

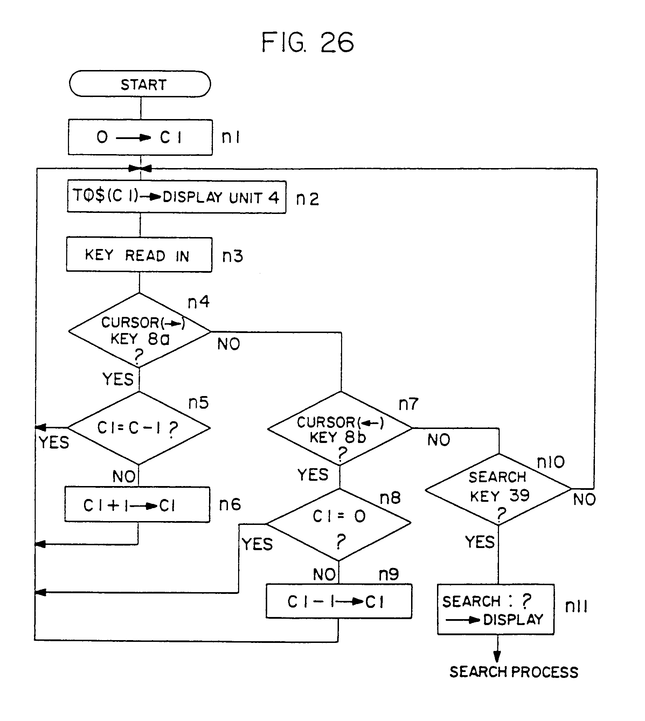

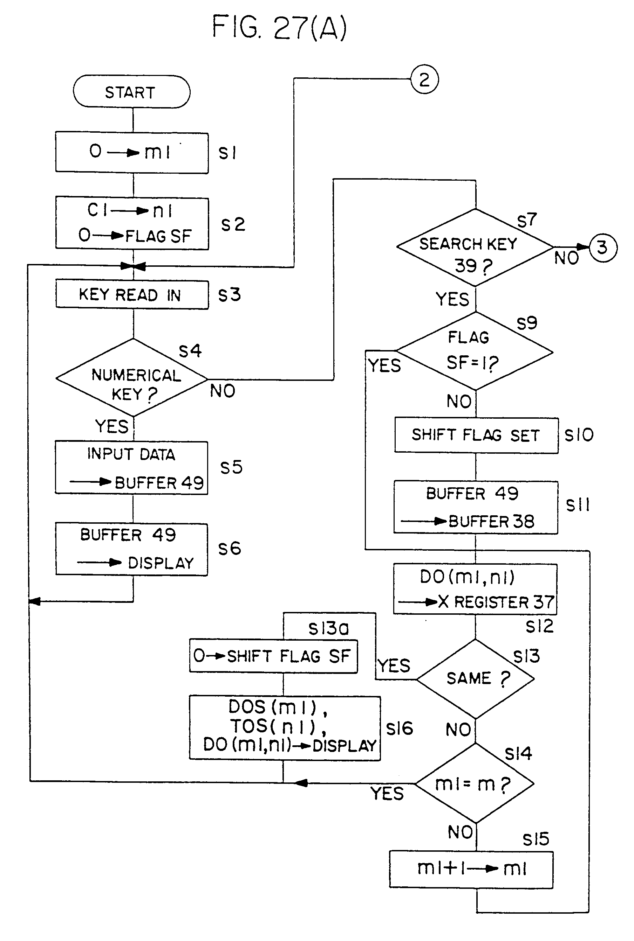

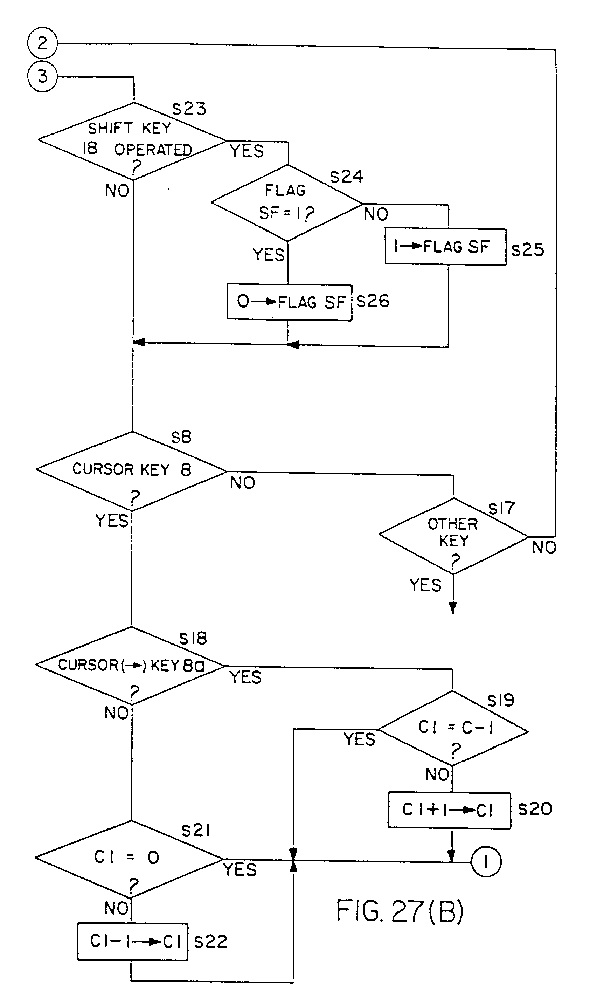

Fig. 25 is a view showing a display example on the display unit 4 of the pocket computer 1. Figs. 26 and 27 are flow charts showing a searching process of the present embodiment. The process of the embodiment according to the present invention will be explained with reference to Figs. 22 to 27. Assuming that the table data shown in Table 2 are stored in the table data area 33 in the computer 1. In Fig. 26, in case the column item name "Japanese" for example in Table 2 is displayed on the display unit 4 of the computer 1, the count value $c_1$ which is a parameter showing the row item name or each column item in Table 2 is set 0 in the step nl and the string function T0$(c1)(c1=0) corresponding to the count value $c_1$ is displayed in the step n2.

In the step n3 the key to be operated is read in the key input portion 22. In the step n4 it is judged whether or not the read-in key is a cursor right shift key 8a, and in case of the cursor right shift key 8a, it is judged in the step n5 whether or not the count value $c_1$ indicate the right edge of the table (c1=c-1). In case the count value $c_1$ does not reach the right edge of the table (c1 ≠ c-1), the count value $c_1$ is added by 1 in the step n6 and the program goes back to the step n2. That is, the item name of the next column "Science" is displayed on the display unit 4.

In case the count value $c_1$ reaches the right edge of the table (c1=c-1), the program goes back to the step n2 without adding 1 to the count value $c_1$. That is, the same display is repeated on the display unit 4. In case the read-in key is not the cursor right shift key 8a in the step n4, it is judged in the step n7 whether or not the read-in key is a cursor left shift key 8b. In case of the cursor left shift key 8b, it is judged in the step n8 whether or not the count value $c_1$ reaches the left edge of the table (c1=0). In case the count value $c_1$ does not reach the left edge, the count value $c_1$ is decreased by 1 in the step n9 and the process goes back to the step n2. That is, the next column item name "Mathematics" is displayed on the display unit 4.

In case the count value $c_1$ reaches the left edge (c1=0), the process goes back to the step n2 without decreasing the count value $c_1$ by 1.

In case the read-in key is not the cursor left shift key 8b, the process goes to the step n10 and it is judged whether or not the read-in key is the search key 39. In case the read-in key is not the search key 39, the process goes back to the step n2. In case the read-in key is the search key 39, "search: ?" is displayed on the display unit 4 as shown in Fig. 25(1) in the step n11, subsequently the process goes to the search process shown in Fig. 27. As mentioned above, it means that in the flow chart in Fig. 26 any of the column items with respect to the data column shown in Fig. 22 can be selected and searched.

In Fig. 27, in the step S1 the count value ml of the m register 35, which is the parameter representing the column position of the table data in Table 2 is cleared so as to indicated the first row of the Table 2. In the step S2 the count value nl of the n register 36 is set to the count value $c_1$ which is the parameter showing the column item of the Table 1 set in the flow chart in Fig. 26 and the shift flag SF as mentioned below is set 0. In the step S3 the key inputted in the key input portion 22 is read in.

In the step S4 it is judged whether or not the read-in key is one of the numerical keys group 6. In case the read-in key is a numerical key, the inputted numerical data is stored in the key input buffer 49 in the step S5 and the contents stored in the key input buffer 49 are displayed on the display unit 4 in the step S6. That is, when the data "35" is inputted by operating the numerical key 6, the display "search: 35_" is displayed on the display unit 4 as shown in Fig. 25(2).

In case the read-in key is not a numerical key in the step S4, the process goes to the step S7 and it is judged whether or not the read-in key is the search key 39. In case the read-in key is not the search key 39, the process goes to the step S8, and in case the read-in key is the search key 39, the process goes to the step S9 and it is judged whether or not the shift flag SF is set 1. Since the shift flag SF is set 0 in the step S2, the shift flag SF is set 1 in the step S10 and in the step S11 the content of the key input buffer 49 is transferred to the comparison data storing buffer 38 of the first memory portion for searching. In the step S12 the table data D0(m1,n1) of Table 2 indicated by the count values ml and nl is taken out into the X register 37 of the second memory portion.

In the step S13 the content stored in the X register 37 is compared with the content stored in the buffer 38 and it is judged whether or not these two contents are same. In case the two kinds of contents are not same, it is judged in the step S14 whether or not the count value ml reaches the maximum row number m of the Table 2, in other words, the searched row reaches the end row of the Table 2. In case the count value ml does not reach the end row number m (m1 ≠ m), in the step S15 the count value ml is added by 1 and the process goes back to the step S12. In case the count value ml reaches the maximum row number m in the step S14, the process goes back to the step S3 without increasing the count value ml and the key is read-in.

In case the content stored in the X register 37 is same as the content stored in the buffer 38 in the step S13, the process goes to the step S13a and the shift flag SF is reset 0. Subsequently, the process goes to the step S16 and the string functions T0$(m1) and T0$(n1) and the data D0(m1,n1) with respect to the count values ml and nl are displayed in the display unit 4. That is, the row item and column item and the data "Kato: Japanese=35" are displayed on the display unit 4 with respect to the reference value depending on the input data 35 with respect to the column item of "Japanese" in Table 1 as shown in Fig. 25(3).

In case the shift key 18 is operated and subsequently the search key 39 is operated in the step S3 after the search operation with respect to the input data 35 is automatically executed, the process jumps to the step S12 from the step S9 without processing in the steps S10 and S11. That is, when the search operation is executed in the above-mentioned step, the corresponding search operation is continued without changing the input data "38" stored in the comparison data storing buffer 38. Therefore, the display "Numata: Japanese=35." is displayed on the display unit 4 as shown in Fig. 25(5).

In case the read-in key is not the search key 39 in the step S7, the process goes to the step S23 and it is judged whether or not the shift key 18 is operated, in other words, whether the search operation is continued or other operation is started. In case the shift key 18 is not operated in the step S23, the process goes to the step S8 and in case the shift key 18 is operated, the process goes to the step S24. It is judged in the step S24 whether or not the shift flag SF is set 1. In case the shift flag SF is set 0, the shift flag SF is set 1 in the step S25 and the process goes to the step S8. In case the shift flag SF is set 1, the shift flag SF is set 0 in the step S26 and the process goes to the step S8.

Next in the step S8 it is judged whether or not the read-in key is one of the cursor keys group 8. In case the read-in key is not a cursor key, the process goes to the step S17, and in case the read-in key is a cursor key, the process goes to the step S18 and it is judged whether or not the read-in key is the cursor right shift key 8a of the cursor keys group 8. In case the read-in key is the cursor right shift key 8a, it is judged in the step S19 whether or not the count value c1 reaches the right edge of the Table 2 (c1=c-1). In case the count value c1 does not reach the right edge of the Table 1, the count value c1 is added by 1 in the step S20 and the process goes back to the step S16. That is, even if the process is in searching operation of the column item mentioned above, the display "Kato: Science=94." is displayed on the display unit 4 as shown in Fig. 25(4) by operating the cursor right shift key 8a. In case the count value c1 reaches the right edge of the Table 2 (c1=c-1) in the step S19, the count value c1 is not added by 1 and the corresponding column item "Science" is remained to be indicated.

In case the read-in key is not the cursor right shift key 8a in the step S18, since it means that the cursor left shift key 8b was pressed, it is judged in the step S21 whether or not the count value c1 reaches the left edge of Table 2. In case the count value c1 reaches the left edge of Table 2, the process goes back to the step S3 as it is. In case the count value c1 does not reach the left edge of Table 2, the count value c1 is decreased by 1 in the step S22 and the process goes back to the step S3.

In the present embodiment as mentioned above, in case the table data as shown in Table 2 is inputted, the search operation of such a table data can be executed basically along the column direction of the table data. Even after the first search operation is finished by operating the search key 39, in case the search operation is executed on the basis of the same input data, it is not necessary to input such data again and the search operation can be sequentially executed only by operating the shift key 18.

As described above, in the data processing device according to the present invention, the data group with arrangement aspect of a matrix shape are stored in the memory means. On the other hand, the data for comparison is inputted by the input means and the inputted data is stored in the first memory portion. The data in the above-mentioned data group is stored in turns in the second memory portion so as to be compared with the inputted data, and then the contents in the second memory portion are sequentially compared, whereby the data of the data group and the data inputted through the input means can be continuously compared. Therefore, the operational ability of such a data processing device can be remarkably improved.

## Claims

1. A statistic processing system of a portable minicomputer (1) comprising;
   - a first memory (462) for storing each data of a table format formed of plural row and column items,
   - input means (32,33) for inputting each item of said data into a selected row and/or column of the table format memory (462),
   - a second memory means (453) for storing a plurality of statistical calculation functions,
   - indicating means for indicating any one of the rows or the columns of data items stored in said table format memory (462) by the above mentioned input means (32,33), and
   - calculation indicating keys for selecting one of said plural kinds of statistic calculation functions, wherein the statistic calculation indicated by operating said calculation indicating key is executed with respect to the indicated row or column.

2. A statistic processing system according to claim 1 comprising;
   - an indicating key for indicating and inputting that the data is not present when the item data is inputted as one key of said input means,
   - generating means (34) for generating a sign data showing the absence of the data (i.e. missing data) in response to the operation of said indicating key, and
   - detection means for detecting the sign data showing the missing data at the time of the statistic calculation processing, wherein the statistic calculation indicated by said calculation indicating keys is executed on the indicated row or column excluding the corresponding missing data from the sample number on the basis of the detection of the missing data.

3. A statistic processing according to claim 1 or 2 further comprising;
   reading out means for reading out data from each item data area allocated to said memory,
   judging means for judging whether the data read out by said reading out means is a specific data or not, in case of judging the data to be the specific data, changing the specific data into a specific character data corresponding to said specific data and generating the specific character data, and on the contrary in case of judging the data not to be the specific data, generating the data read out by said reading out means as it is, and
   display means for displaying the data on the basis of the output data of said judging means,
   wherein said specific character is displayed in said display means in case the corresponding data is said specific data at the time of reading out the data stored in said item data area.

4. A statistic processing system of a portable minicomputer according to one of the claims 1 to 3, further comprising;
   numerical distribution function calculation indicating keys (12) for inputting variables such as provability values and degree of freedom, and a non-volatile memory for memorizing a distribution function calculation routine on the basis of said distribution function calculation indicating keys (12),
   executing a distribution function calculation.

5. A statistic processing system of a portable minicomputer according to claim 4, wherein the distribution function calculation is executed by selecting a suitable routine as the distribution function calculation routine among an approximate calculation routine, recurrence formula calculation routine and a calculation routine for selecting a corresponding calculation value of a calculation values group stored prefixedly.

6. A statistic processing system of a portable minicomputer according to one of the claims 1 to 5, further comprising;
   a display unit for displaying said character or numerical data formed in the displaying rows of which the number is less than that of said table data memory,
   operating means for selecting character or numerical data remorizing area in the end portion of any row and column corresponding to said table data memory, and
   reading out means for reading out the item names of the row and column corresponding to the indicated position on the basis of indication of the end position of the desired row and column in the table data memory by said operating means and for reading out the character or numerical data in the end position from said memory,
   wherein the item name and the character or numerical data in the end position of the row and column read out by said reading out means are displayed in the display unit.

7. A statistic processing system of a portable mini-computer according to one of the claims 1 to 6, further comprising;
memory means for memorizing a data group with an arrangement aspect of matrix shape,
a first memory portion for storing the input data from said input means for comparison,
a second memory portion for storing said data of the data group for comparison,
wherein the comparison between the contents of the first memory portion and the contents of the second memory portion is sequentially executed.

**Patentansprüche**

1. Statistikverarbeitungssystem eines tragbaren Mini-Computers (1), mit:
   - einem ersten Speicher (462) zum Speichern sämtlicher Daten in einem aus mehreren Zeilen- und Spalten-Datenelementen gebildeten Tabellenformat,
   - einer Eingabeeinrichtung (32, 33) zum Eingeben jedes Datenpostens der Daten in eine ausgewählte Zeile und/oder Spalte des Tabellenformatspeichers (462),
   - einer zweiten Speichereinrichtung (453) zum Speichern mehrerer statistischer Rechenfunktionen,
   - einer Angabeeinrichtung zum Angeben einer beliebigen Zeile oder Spalte der mittels der genannten Eingabeeinrichtung (32, 33) in den Tabellenformatspeicher (462) eingegebenen Datenposten, und
   - Berechnungsangabetasten zum Wählen einer der zahlreichen statistischen Rechenfunktionen, wobei die durch Betätigen der Berechnungsangabetaste angegebene statistische Berechnung in bezug auf die angegebene Zeile oder Spalte durchgeführt wird.

2. Statistikverarbeitungssystem nach Anspruch 1, mit:
   - einer Anzeigetaste, als eine Taste der Eingabeeinrichtung, zum Anzeigen und Eingeben, daß die Daten nicht vorhanden sind, wenn Datenposten eingegeben werden,
   - einer Erzeugungseinrichtung (34) zum Erzeugen von (Vor-) Zeichendaten, die das Nichtvorhandensein der Daten (d. h. fehlende Daten) in Reaktion auf die Betätigung der Anzeigetaste anzeigen, und
   - einer Erkennungseinrichtung zum Erkennen der die fehlenden Daten anzeigenden Zeichendaten zum Zeitpunkt der statistischen Rechenverarbeitung, bei der die durch die Berechnungsangabetasten angegebene statistische Berechnung auf die angegebene Zeile oder Spalte angewendet wird, wobei die entsprechenden fehlenden Daten auf der Basis der Erkennung der fehlenden Daten aus der Stichprobenzahl ausgeschlossen werden.

3. Statistikverarbeitungssystem nach Anspruch 1 oder 2, ferner mit:
   - einer Ausleseeinrichtung zum Auslesen von Daten aus jedem dem Speicher zugewiesenen Datenpostenbereich,
   - einer Beurteilungseinrichtung zum Beurteilen, ob die von der Ausleseeinrichtung ausgelesenen Daten spezifische Daten sind oder nicht, wobei, wenn die Daten als die spezifischen Daten erkannt werden, die spezifischen Daten zu den spezifischen Daten entsprechende spezifische Zeichendaten geändert und die spezifischen Zeichendaten erzeugt werden, und wenn im Gegensatz dazu festgestellt wird, daß die Daten nicht die spezifischen Daten sind, die von der Ausleseeinrichtung ausgelesenen Daten unverändert erzeugt werden, und
   - einer Anzeigeeinrichtung zum Anzeigen der Daten auf der Basis der Ausgangsdaten der Beurteilungseinrichtung,
   - wobei das spezifische Zeichen auf der Anzeigeeinrichtung zum Zeitpunkt des Auslesens der in dem Datenpostenbereich gespeicherten Daten dann angezeigt wird, wenn die entsprechenden Daten die spezifischen Daten sind.

4. Statistikverarbeitungssystem eines tragbaren Mini-Computers (1) nach einem der Ansprüche 1 bis 3, ferner mit:
   - Anweisungstasten (12) für das Rechnen mit einer numerischer Verteilungsfunktion, um Variablen wie Wahrscheinlichkeitswerte und Freiheitsgrad einzugeben, und
   - einem nicht flüchtigen Speicher zum Speichern einer Verteilungsfunktionsberechnungsroutine auf der Basis der Verteilungsfunktionsberechnungsanweisungstasten (12) zur Durchführung einer Verteilungsfunktionsberechnung.

5. Statistikverarbeitungssystem eines tragbaren Mini-Computers nach Anspruch 4, bei dem die Verteilungsfunktionsberechnung ausgeführt wird, indem aus einer Näherungsberechnungsroutine, einer Rekursionsformelberechnungsroutine und einer Berechnungsroutine zum Auswählen eines entsprechenden Berechnungswertes einer zuvor gespeicherten Gruppe von Berechnungswerten eine geeignete Routine als Verteilungsfunktionsberechnungsroutine gewählt wird.

6. Statistikverarbeitungssystem eines tragbaren Mini-Computers nach einem der Ansprüche 1 bis 5, ferner mit:
   - einer Anzeigeeinheit zum Anzeigen der Zeichen- oder numerischen Daten, die in den Anzeigezeilen gebildet sind, deren Zahl geringer ist als die des Tabellenspeichers,
   - einer Operationseinrichtung zum Wählen von Speicherbereichen für Zeichendaten oder numerische Daten im Endabschnitt einer beliebigen Zeile und Spalte entsprechend dem Tabellendatenspeicher, und
   - einer Ausleseeinrichtung zum Auslesen der Datenelementnamen der Zeile und Spalte entsprechend der angegebenen Position auf der Basis der Angabe der Endposition der gewünschten Zeile und Spalte in dem Tabellendatenspeicher durch die Operationseinrichtung und zum Auslesen der Zeichendaten oder der numerischen Daten in der Endposition aus dem Speicher,
   - wobei der Datenelementname und die Zeichendaten oder die numerischen Daten in der Endposition der Zeile und Spalte. die von der Ausleseeinrichtung ausgelesen werden, auf der Anzeigeeinheit angezeigt werden.

7. Statistikverarbeitungssystem eines tragbaren Mini-Computers nach einem der Ansprüche 1 bis 6, ferner mit:
   - einer Speichereinrichtung zum Speichern einer Datengruppe in matrixartiger Anordnung,
   - einem ersten Speicherbereich zum Speichern der über die Eingabeeinrichtung zum Vergleich eingegebenen Daten,
   - einem zweiten Speicherbereich zum Speichern der Daten der Datengruppe zum Vergleich,
   - wobei der Vergleich zwischen dem Inhalt des ersten Speicherabschnitts und dem Inhalt des zweiten Speicherbereichs sequentiell durchgeführt wird.

## Revendications

1. Système de traitement statistique d'un mini-ordinateur portatif (1) comportant:
   - une première mémoire (462) pour emmagasiner chaque donnée d'un format de tableau formé de plusieurs éléments de rangée et de colonne;
   - des moyens d'entrée (23, 33) pour entrer chaque donnée élémentaire desdites données dans une rangée et/ou colonne sélectionnée de la mémoire de format de tableau (462);
   - des seconds moyens formant mémoire (453) pour emmagasiner une multiplicité de fonctions de calcul statistique;
   - des moyens d'indication pour indiquer n'importe laquelle des rangées ou des colonnes de données élémentaires emmagasinées dans ladite mémoire de format de tableau (462) par lesdits moyens d'entrée susmentionnés (32, 33); et
   - des touches d'indication de calcul pour sélectionner une fonction de ladite multiplicité de fonctions de calcul statistique, le calcul statistique indiqué par l'actionnement de ladite touche d'indication de calcul étant exécuté relativement à la rangée ou colonne indiquée.

2. Système de traitement statistique selon la revendication 1 comportant:
   - une touche d'indication pour indiquer et entrer l'absence de la donnée, lorsque la donnée élémentaire est entrée, constituant une touche desdits moyens d'entrée;
   - des moyens de génération (34) pour générer une donnée de signe indiquant l'absence de la donnée (c'est-à-dire donnée manquante) en réponse à l'actionnement de ladite touche d'indication; et
   - des moyens de détection pour détecter la donnée de signe indiquant l'absence de la donnée lors du processus de calcul statistique, le calcul statistique indiqué par lesdites touches d'indication de calcul étant exécuté sur la rangée ou la colonne indiquée, la donnée manquante correspondante étant omise du numéro de l'échantillon sur la base de la détection de l'absence de la donnée.

3. Système de traitement statistique selon la revendication 1 ou la revendication 2, comportant en outre: des moyens d'extraction pour extraire des données de chaque zone de données élémentaires affectée à ladite mémoire;

des moyens de détermination pour déterminer si la donnée extraite par lesdits moyens d'extraction constitue une donnée spécifique ou non, et, s'il est déterminé que la donnée constitue une donnée spécifique, pour convertir la donnée spécifique en donnée de caractère spécifique correspondant à ladite donnée spécifique et générer la donnée de caractère spécifique ou, si, dans le cas contraire, il est déterminé que la donnée ne constitue pas une donnée spécifique, pour générer les données extraites par lesdits moyens d'extraction telles quelles sont; et

des moyens d'affichage pour afficher les données sur la base des données de sortie desdits moyens de détermination, ladite donnée de caractère spécifique étant affichée dans lesdits moyens d'affichage si la donnée correspondante constitue ladite donnée spécifique lors de l'extraction des données emagasinées dans ladite zone de données élémentaires.

4. Système de traitement statistique d'un mini-ordinateur portatif selon l'une des revendications 1 à 3, comportant en outre:

des touches de calcul de fonction de répartition numérique (12) pour entrer des variables, telles que des valeurs de prouvabilité et de degré de liberté, et une mémoire rémanente pour mémoriser un sous-programme de calcul de fonction de répartition sur la base de l'exécution d'un calcul de fonction de répartition par lesdites touches d'indication de calcul de fonction de distribution (12);

5. Système de traitement statistique d'un mini-ordinateur portatif selon la revendication 4, dans lequel le calcul de fonction de répartition est exécuté en sélectionnant un sous-programme approprié en tant que sous-programme de calcul de fonction de répartition parmi un sous-programme de calcul approximatif, un sous-programme de calcul de formule de récurrence et un sous-programme de calcul pour sélectionner une valeur de calcul correspondante d'un groupe de valeurs de calcul emmagasiné de façon pré-établie.

6. Système de traitement statistique d'un mini-ordinateur portatif selon l'une des revendications 1 à 5, comportant en outre:

une unité d'affichage pour afficher lesdites données de caractère ou données numériques formées dans les rangées d'affichage dont le numéro est inférieur à celui de ladite mémoire de données de tableau;

des moyens de commande pour sélectionner une zone de mise en mémoire de données de caractère ou de données numériques dans la partie finale de toute rangée et colonne correspondant à ladite mémoire de données de tableau; et

des moyens d'extraction pour extraire les noms des éléments de la rangée et colonne correspondant à l'emplacement indiqué sur la base de l'indication de l'emplacement final de la rangée et de la colonne désirées dans la mémoire de données de tableau par lesdits moyens de commande et pour extraire les données de caractère ou données numériques de l'emplacement final de ladite mémoire, le nom d'élément et les données de caractère ou données numériques de l'emplacement final de la rangée et de la colonne extraits par lesdits moyens d'extraction étant affichés dans l'unité d'affichage.

7. Système de traitement statistiques d'un mini-ordinateur portatif selon l'une des revendications 1 à 6, comportant en outre:

des moyens formant mémoire pour mettre en mémoire un groupe de données disposé, se présentant, du point de vue de sa disposition, sous la forme d'une matrice;

une première partie de mémoire pour emmagasiner les données d'entrée en provenance desdits moyens d'entrée aux fins de comparaison;

une seconde partie de mémoire pour emmagasiner lesdites données du groupe de données aux fins de comparaison;

la comparaison entre le contenu de la première partie de mémoire et le contenu de la seconde partie de mémoire étant exécutée séquentiellement.

# FIG. 1

EP 0 249 961 B1

# FIG. 2

# FIG. 3(1)

## FIG. 3(2)

TABLE INPUT

$S_3$ — $\boxed{0 \rightarrow h}$

$S_4$ — $\boxed{\text{TABLE TITLE } h+1 = ? \rightarrow \text{DISPLAY}}$

$S_5$ — $\big(\text{KEY READ IN}\big)$

$S_6$ — ALPHABET OR KEY —NO→ $S_8$ INPUT KEY —NO→ $S_9$ TABLE KEY —NO→

YES (from S6)

$S_7$ — $\boxed{\begin{array}{c}\text{INPUT CHARACTER} \\ \rightarrow \text{INP BUFFER}\end{array}}$

$\boxed{\begin{array}{c}\text{INP BUFFER} \\ \rightarrow \text{DISPLAY}\end{array}}$

YES (from S8) — $\boxed{\begin{array}{c}\text{INP BUFFER} \\ \rightarrow \text{ThS}(0)\end{array}}$ — $S_{10}$

YES (from S9) — $S_{11}$ — $\Diamond\, n = 9\, \Diamond$ —NO→ $\boxed{h+1 \rightarrow h}$

YES — $\boxed{0 \rightarrow h}$

$S_{12}$ — $\boxed{0 \rightarrow C}$

$\boxed{\begin{array}{c}\text{COLUMN ITEM} \\ C+1 = ? \quad \text{DISPLAY}\end{array}}$

$S_{13}$ —

$S_{14}$ — $\big(\text{KEY READ IN}\big)$

$S_{15}$ — ALPHABET OR KANA KEY —NO→ INPUT KEY —NO→

YES

$S_{16}$ — $\boxed{\begin{array}{c}\text{INPUT CHARACTER} \\ \rightarrow \text{INP BUFFER}\end{array}}$

$\boxed{\begin{array}{c}\text{INP BUFFER} \\ \rightarrow \text{DISPLAY}\end{array}}$

YES (from INPUT KEY) — $S_{17}$ — INP BUFFER $= 0$ —YES→

NO

$S_{18}$ — $\boxed{\begin{array}{c}\text{ThS}(C) \rightarrow \text{ThS}(C+1) \\ \text{INP BUFFER} \rightarrow \text{ThS}(C)\end{array}}$

$\boxed{C+1 \rightarrow C}$

$S_{19}$

# FIG. 4

$S_{20}$    $0 \longrightarrow L$

$S_{21}$    ROW ITEM 1 = ? → DISPLAY

$S_{22}$    KEY READ IN

$S_{23}$    ALPHABET OR FRAME KEY   NO

$S_{25}$    INPUT KEY   NO

YES

$S_{24}$    INPUT CHARACTER → INPBUFFER    INPBUFFER → DISPLAY

YES

$S_{26}$    INPBUFFER — ∅   NO

$S_{28}$

YES

$S_{27}$

$S_{28}$    INPBUFFER → DhS(L)    L + 1 → L

FIG. 5

# FIG. 6

STATISTIC PROCESSING

S50 — KEY READ IN

S51 — X KEY — NO — S52 — Y KEY — NO — S53 — RUN KEY — NO

S54 — YES

DISPLAYED COLUMN NUMBER STORED IN X COUNTER

YES

DISPLAYED COLUMN NUMBER STORED IN Y COUNTER — S56

S55 — $n[>X]=T\phi S(n)$ COLUMN ITEM ⟶ DISPLAY

$n[>Y]=T\phi S(n)$ COLUMN ITEM ⟶ DISPLAY — S57

TO FIG. 5 AT (A)

S58 — X,Y INDICATION — NO — S59 — X INDICATION — NO

S60 — YES

STATISTIC CALCULATION WITH TWO VARIABLES IS EXECUTED BY COLUMN DATA INDICATED BY X,Y

YES

STATISTIC CALCULATION WITH ONE VARIABLE IS EXECUTED BY COLUMN DATA INDICATED BY X — S61

# FIG. 7

S70 — $0 \longrightarrow \ell$

S71 — $0 \longrightarrow \Sigma$

S72 — ROW ITEM NUMBER L READ OUT BY VARIABLE DOS

S73 — $D\Phi(\ell \ X)$ READOUT

S74 — MISSING DATA ? — YES

NO

S75 — UN-INPUT DATA — YES

NO

S76 — $D\Phi(\ell,X) + \Sigma \longrightarrow \Sigma$

S77 — $\ell = L$ — NO

YES

S79

$\ell + 1 \longrightarrow \ell$

S78 — $\Sigma \longrightarrow$ VARIABLE Y

$\Sigma \longrightarrow$ DISPLAY

S80

## FIG. 8(A)

| TOS | O | C | TOS(O)<br>"MATHEMATICS" | TOS(1)<br>"JAPANESE" | TOS(2)<br>"SCIENCE" |
|---|---|---|---|---|---|
| TOS(3)<br>"RECORD LIST" | DOS | O | L | DOS(O)<br>"AOKI" | DOS(1)<br>"KATO" |
| DOS(2)<br>"SAITO" | DOS(3)<br>"CHIBA" | | 53 | DOS(4)<br>"NUMATA" | DOS(5)<br>"HAYASHI" |
| DOS(6)<br>"YOKOI" | DO | m | n | DO(O,O)<br>63 | DO(O,1)<br>82 |
| DO(O,2)<br>73 | DO(1,O)<br>49 | | | DO(1,1)<br>35 | DO(1,2)<br>94 |
| DO(2,O)<br>75 | | –––– | | | |
| | | | | | |
| | | | | –––– | DO(6,2)<br>74 |

52    50    51    54    51    51
55    56

## FIG. 8(B)

| RECORD LIST | | | |
|---|---|---|---|
| | MATHEMATICS | JAPANESE | SCIENCE |
| AOKI | 63 | 82 | 73 |
| KATO | 49 | 35 | 94 |
| SAITO | 75 | 63 | 83 |
| CHIBA | 93 | 46 | 63 |
| NUMATA | 24 | 35 | 42 |
| HAYASHI | 38 | 79 | 56 |
| YOKOI | 63 | 95 | 74 |

TABLE TITLE

COLUMN ITEM

ROW ITEM

## FIG. 9(A)

| | | | | | |
|---|---|---|---|---|---|
| T O S | O | C | TOS(0) "MATHEMATICS" | TOS(1) "ENGLISH" | TOS(2) "SCIENCE" |
| TOS(3) "JAPANESE" | | TOS(4) "RECORD LIST" | DOS | O L | DOS(0) "AOKI" |
| DOS(1) "KATO" | | DOS(2) "SAITO" | | — — — — | — |
| D O | m | n | DO(0,0) 30 | DO(0,1) 80 | DO(0,2) 45 |
| DO(0,3) 93 | | DO(1,0) 85 | DO(1,1) 63 | | DO(1,2) 47 |
| DO(1,3) 39 | | DO(2,0) 37 | | — — — — | — |
| — — — — | | | DO(l,l) $9999999999 \times 10^{99}$ | | |
| — — — | | DO(l,g) $-9999999999 \times 10^{99}$ | | — — — — | — |

## FIG. 9(B)

TABLE LIST

COLUMN ITEM

| RECORD LIST | | | | |
|---|---|---|---|---|
| | MATHEMATICS | ENGLISH | SCIENCE | JAPANESE |
| AOKI | 30 | 80 | 45 | 93 |
| KATO | 85 | 63 | 47 | 39 |
| SAITO | 37 | 43 | 76 | 68 |
| TAKAI | 49 | 83 | 93 | 48 |
| YOKOTA | 34 | 29 | 47 | 39 |

ROW ITEM

# FIG. 10(A)

# FIG. 10(B)

EP 0 249 961 B1

FIG. 11

# FIG. 12

LCD ~41

DISPLAY BUFFER ~43
DISPLAY CONTROLLER ~42

CPU ~40

KEY BOARD ~44

ROM ~45

| | |
|---|---|
| INITIALIZE PROGRAM | 451 |
| INTERPRETER | 452 |
| STATISTIC PROGRAM | 453 |
| CG | 454 |
| OTHER SYSTEM PROGRAMS | 456 |
| DISTRIBUTION TABLE | 457 |

RAM

BASIC PROGRAM ~46 ~461

SYSTEM AREA ~462

## FIG. 13

| DEGREE OF FREEDOM | LIMITATION | (A) APPROXIMATE | (B) RECURRENCE | (C) ROM |
|---|---|---|---|---|
| LARGE (MORE THAN 40) | PRECISION | ◯ | ◯ | ◯ |
| | CAPACITY | ◯ | ◯ | ✕ |
| | SPEED | ◯ | ✕ | ◯ |
| SMALL (LESS THAN 39) | PRECISION | ✕ | ◯ | ◯ |
| | CAPACITY | ◯ | ◯ | ✕ |
| | SPEED | ◯ | ✕ | ◯ |

## FIG. 14

| n \ R | 1.0 --------- | 0.05 | -------- | 0.01 | ------ 0.0 |
|---|---|---|---|---|---|
| 1 2 ⋮ 39 | RECURRENCE | ROM | RECURRENCE | ROM | RECURRENCE |
| 40 ⋮ | APPROXIMATE | | | | |

FIG. 15

FIG. 16

| STEP | KEY OPERATION | DISPLAY |
|---|---|---|
| $(S_{11})$ | DISTRIBUTION FUNCTION t(P) | n = ? |
| $(S_{12})$ | 9 | n = 9__ |
| $(S_{13})$ | ENTER | P = ? |
| $(S_{14})$ | 0 . 0 1 | P = 0 . 01 __ |
| $(S_{15})$ | ENTER | 2.821 |

## FIG. 17

| BASIC FUN. | INPUT KEY | CONTENT OF DISTRIBUTION FUNCTION |
|---|---|---|
| PND(P) | DATA N(P) | IN NORMAL DISTRIBUTION, THE POINT CORRESPONDING TO THE UPSIDE PROVABILITY P IS OBTAINED |
| NDS(x) | DATA N(x) | IN NORMAL DISTRIBUTION, THE UPSIDE PROVABILITY IS OBTAINED FROM THE POINT x |
| PTD(n,p) | DATA t(p) | IN t-DISTRIBUTION OF n DEGREE OF FREEDOM, THE POINT CORRESPONDING TO THE UPSIDE PROVABILITY P IS OBTAINED |
| TDS(n,x) | DATA t(x) | IN t-DISTRIBUTION OF n DEGREE OF FREEDOM, THE UPSIDE PROVABILITY IS OBTAINED FROM THE POINT x |
| PXD(n,p) | DATA $x^2$(p) | IN $x^2$-DISTRIBUTION OF n DEGREE OF FREEDOM, THE POINT CORRESPONDING TO THE UPSIDE PROVABILITY P IS OBTAINED |
| XDS(n,x) | DATA $x^2$(x) | IN $x^2$-DISTRIBUTION OF n DEGREE OF FREEDOM, THE UPSIDE PROVABILITY IS OBTAINED FROM THE POINT x |
| PFD($n_1$,$n_2$,p) | DATA F(p) | IN F-DISTRIBUTION OF $n_1$,$n_2$ DEGREE OF FREEDOM, THE POINT CORRESPONDING TO THE UPSIDE PROVABILITY P IS OBTAINED |
| FDS($n_1$,$n_2$,x) | DATA F(x) | IN F-DISTRIBUTION OF $n_1$,$n_2$ DEGREE OF FREEDOM, THE UPSIDE PROVABILITY IS OBTAINED FROM THE POINT x |
| BDS(p,n,r) | DATA B | IN BINOMIAL DISTRIBUTION, THE PROVABILITY OF WHICH THE PHENOMENA OF THE PROVABILITY P OCCUR r TIMES OF n TIMES |
| PDS(m,x) | DATA P | IN POISSON'S DISTRIBUTION, THE PROVABILITY OF WHICH THE PHENOMENA OCCURRING m TIMES IN AVERAGE OCCUR x TIMES |

# FIG. 18

ON

S21

INITIALIZE PROCESS — S22

STAT SYMBOL TURNED ON — S23

KEY READ-IN — S24

S25
DIST. F. KEY — NO

S27
BASIC KEY — NO

S29
STAT KEY — NO

YES

YES

YES

OTHER PROCESS

S26
DIST F. CAL PROCESS

S28
BASIC PROGRAM PROCESS

CAL MODE

# FIG. 19

POCKET COMPUTER

STAT CAL RUN PRO

EP 0 249 961 B1

## FIG. 20

35  34          30          31          32  31      33  36  34

| TOS ⊙ C =5 | TOS(0) "MATHEMATICS" | TOS(1) "ENGLISH" | TOS(2) "SCIENCE" |
|---|---|---|---|
| TOS(3) "JAPANESE" | TOS(4) " RECORD LIST " | DOS ⊙ L | DOS(0) " AOKI " |
| DOS(1) " KATO " | DOS(2) "SAITO " | — — — — — — | — |
| D ⊙ m n | DO(0,0) 30 | DO(0,1) 80 | DO(0,2) 45 |
| DO(0,3) 93 | DO(1,0) 85 | DO(1,1) 63 | DO(1,2) 47 |
| DO(1,3) 39 | DO(2,0) 37 | — — — — — — — | |
| 36 — — — — — | | | — — — — — |
| — — — — | | — — — — — — — | — — |
| | | | |

# FIG. 21(A)

```
                    ▽
                    │
          S₁₀ ─╮    │
         ╱─────────────╲     NO
        ╱  TABLE KEY    ╲──────────▶ OTHER PROCESSES
        ╲               ╱
         ╲─────────────╱
              │ YES
    ┌─────────────────────┐
    │      0 ──▶ h,m,n     │────── S₁₁
    └─────────────────────┘
              │
              ▼
    ┌─────────────────────┐
    │  TAKE IN THE NAME OF │
    │  VARIABLES Th$ (h=0) │────── S₁₂
    └─────────────────────┘
              │
    ┌─────────────────────┐
    │   NUMBER OF ITEM     │
    │     (C) ──▶ C        │────── S₁₃
    └─────────────────────┘
              │
    ┌─────────────────────┐
    │  Th$(C-1) ITEM DATA  │
    │   TAKEN IN (h=0)     │────── S₁₄
    └─────────────────────┘
              │
    ┌─────────────────────┐
    │ "TABLE TITLE=ITEM DATA"│
    │     DISPLAY         │────── S₁₅
    └─────────────────────┘
              │
    ┌─────────────────────┐
    │  TAKE IN THE AREA OF │
    │ THE NAME OF VARIABLES│────── S₁₆
    │      Dh$(h=0)        │
    └─────────────────────┘
              │
    ┌─────────────────────┐
    │   NUMBER OF ITEMS    │
    │     (L) ──▶ L        │────── S₁₇
    └─────────────────────┘
              │
    ┌─────────────────────┐
    │  TAKE IN THE NAME OF │
    │  VARIABLES Dh (h=0)  │────── S₁₈
    └─────────────────────┘
              │
    ┌─────────────────────┐
    │   NUMBER OF ITEMS    │
    │  (M),(N) ──▶ M,N     │────── S₁₉
    └─────────────────────┘
              │
         ╱─────────────╲   NO
        ╱  TABLE KEY    ╲──────────┐
        ╲               ╱          │
         ╲─────────────╱ S₂₀       │
              │ YES                │
    ┌─────────────────────┐        │
    │      h+1 ──▶ h       │        │
    └─────────────────────┘        │
              │  S₂₁               │
                                   ▼
                                  (2)
```

$0 \rightarrow h,m,n$ — S₁₁

TAKE IN THE NAME OF VARIABLES Th$ (h=0) — S₁₂

NUMBER OF ITEM (C) → C — S₁₃

Th$(C-1) ITEM DATA TAKEN IN (h=0) — S₁₄

"TABLE TITLE=ITEM DATA" DISPLAY — S₁₅

TAKE IN THE AREA OF THE NAME OF VARIABLES Dh$(h=0) — S₁₆

NUMBER OF ITEMS (L) → L — S₁₇

TAKE IN THE NAME OF VARIABLES Dh (h=0) — S₁₈

NUMBER OF ITEMS (M),(N) → M,N — S₁₉

$h+1 \rightarrow h$ — S₂₁

FIG. 21(B)

FIG. 21(C)

EP 0 249 961 B1

⑥

S92 — n = 0 — YES S93
NO
N → n
n-1 → n
S94
YES
S95 — n = 0
NO

⑤

S87 — n = N — NO
YES
O → n    n+1 → n
S89    S88
S90 — TAKE IN DhS(m-1) ITEM DATA
ROW ITEM DATA → DISPLAY — S91
②

④

S83 — m = 0 — YES S84
NO
M → m
m-1 → m
S85
m = 0 — NO
S86
YES

S74 — m+1 → m
S75 — ThS(m-1) ITEM DATA → B
S76 — DhS(n-1) ITEM DATA → A
S77 — NA + NB ≤ ℓ
YES
NO — S78
NA < NB ? — NO
YES
S79 — DELETE TRAILING ONE CHARACTER IN A REGISTER
S80 — DELETE TRAILING ONE CHARACTER IN B REGISTER

S81 — TAKE IN VALUES OF Dh(m-1)(n-1)
S82 — A DATA, B DATA (NUMERIC) → DISPLAY
②

③

S70 — NO — m = M — YES — S71
O → m
S72 — TAKE IN DhS(n-1) ITEM DATA
S73 — LINE ITEM DATA → DISPLAY
②

44

FIG. 21(D)

EP 0 249 961 B1

FIG. 22

# FIG. 23

FIG. 24

40 42 41a 43a 41b 43b 41c

| TØ$ | Ø | C | TØ$(Ø) "MATHEMATICS" | | TØ$(I) "JAPANESE" | TØ$(2) "SCIENCE" |
|---|---|---|---|---|---|---|
| TØ$ (3) "RECORD LIST" | DØ$ | Ø | L | DØ$(Ø) "AOKI" | DØ$(I) "KATO" |
| DØ$(2) "SAITO" | DØ$(3) "CHIBA" | | | DØ$(4) "NUMATA" | DØ$(5) "HAYASHY" |
| DØ$(6) "YOKOI" | DØ | m | n | DØ(Ø,Ø) 63 | DØ(Ø,I) 82 |
| DØ(Ø,2) 73 | DØ(I,Ø) 49 | | | DØ(I,I) 35 | DØ(I,2) 94 |
| DØ(2,Ø) 75 | | . . . | | | |
| | | | | $9.999999999 \times 10^{99}$ | |
| | $-9.999999999 \times 10^{99}$ | | | . . . | DØ(6,2) 74 |

41d  43h  45b  45

44  46  47  45

33

EP 0 249 961 B1

# FIG. 25

(1) | SEARCH: ?

4

(2) | SEARCH: 35 _

4

(3) | KATO : JAPANESE = 35 .

4

(4) | KATO : SCIENCE = 94 .

4

(5) | NUMATA : JAPANESE = 35 .

4

FIG. 26

SEARCH PROCESS

# FIG. 27(A)

② ③

**s23**

SHIFT KEY
18 OPERATED
? — YES

NO

**s24**

FLAG
SF = 1 ? — NO

YES

I → FLAG SF | **s25**

O → FLAG SF | **s26**

**s8**

CURSOR KEY 8
? — NO

YES

**s17**

OTHER
KEY
? — NO

YES

**s18**

CURSOR (→) KEY 8a
? — YES

NO

**s19**

C1 = C-1
? — YES

NO

C1+1 → C1 | **s20**

①

**s21**

C1 = 0
? — YES

NO

C1-1 → C1 | **s22**

FIG. 27(B)